# EUROPEAN PATENT SPECIFICATION

(11) **EP 4 514 889 B1**
(45) Date of publication and mention of the grant of the patent: **27.05.2026**
(21) Application number: 23721850.8
(22) Date of filing: 21.04.2023
(51) Int. Cl.: C08K 5/548, C08K 5/37, C08L 9/00, C08G 77/28, C08G 77/48

(54) **STABILIZED COMPOSITIONS OF SULFUR SILANES WITH HIGH MERCAPTO CONTENT**
STABILE ZUSAMMENSETZUNGEN VON SCHWEFELSILANEN MIT HOHEM MERCAPTOGEHALT
COMPOSITIONS STABLES DE SILANES DE SOUFRE À HAUTE TENEUR EN MERCAPTO

(30) Priority: 26.04.2022 EP 22170105
(43) Date of publication of application: 05.03.2025
(73) Proprietor: Momentive Performance Materials GmbH, 51368 Leverkusen (DE)
(72) Inventor: MAURO, Marco, 42799 Leichlingen (DE); GLATZER, Holger Jürgen, 51377 Leverkusen (DE); CRUSE, Richard W., Yorktown Heights, New York 10598 (US)
(74) Representative: Gille Hrabal Partnerschaftsgesellschaft mbB Patentanwälte
(86) International application number: PCT/EP2023/060450
(87) International publication number: WO 2023/208772

(56) References cited:
- US-A1- 2021 292 520
- US-B1- 6 242 618
- ROEBEN CAREN ET AL: "Rubber & Plastics News - Optimal mixing of precipitated silica, silanes Part 1: Mixing of precipitated silica with silane coupling agents: Silica incorporation and dispersion", 29 June 2015 (2015-06-29), pages 15 - 21, XP055968645, Retrieved from the Internet <URL:https://s3-prod.rubbernews.com/s3fs-public/RN100232626.PDF> [retrieved on 20221006]

## Description

### FIELD OF INVENTION

The present invention relates to a composition comprising one or more sulfur-containing silanes, one or more mercapto-functional organic compounds and at least one acid selected from acids having a pKa, determined in aqueous solution at a temperature of 25°C of less than 3.75, and Lewis acids, as a stabilizing agent, a method of manufacturing the composition, a method of reducing the hydrogen sulfide emission from sulfur-containing silane compositions, the use of the compositions as additive for silica-filled rubber compositions, rubber compositions comprising the inventive compositions and vulcanized articles made therefrom. The stabilized inventive compositions improve the wear performance of a tire tread and dramatically reduce and/or prevent the formation of hydrogen sulfide and disulfide by-products on storage and aging of the composition.

### BACKGROUND OF THE INVENTION

It is known that mercaptans react with sulfur in the presence of small amounts of base catalyst such as amines to generate polysulfides with emission of hydrogen sulfide even at room temperature, e.g.:

2HS-R + S → R-S-S-R + H₂S

2RSH + 2S → RS₃R + H₂S

(see e.g. Freeman H. McMillan and John A. King "Studies on the Willgerodt Reaction. VI. A Mechanism for the Primary Thiol Oxidation" J. Am. Chem. Soc. 1948, 70, 12, 4143-4150; US2237625; B. D. Vineyard "Mercaptan-Sulfur Reaction. Alkyl Trisulfides" J. Org. Chem. 1966, 31, 2, 601-602; and Liu, L.F. et al. Improvement of Thiolate/Disulfide Mediated Dye-Sensitized Solar Cells through Supramolecular Lithium Cation Assembling of Crown Ether. Sci. Rep. 3, 2413; DOI:10.1038/srep02413 (2013)).

The formation of H₂S was also a known issue reported in the literature of sulfur silanes and their blends with mercaptans. For example, "Caren Roeben and Hans-Detlef Luginsland, Optimal mixing of precipitated silica, silanes, Rubber & Plastics News June 29, 2015 15; and H.-D. Luginsland and C. Röben, The development of sulphur-functional silanes as coupling agents in silica-reinforced rubber compounds. Their historical development over several decades Gummi Fasern Kunststoffe, 68, No. 11, 2015, pp. 734-737" report that polysulfides and mercaptans are known to form H₂S at elevated temperatures when blended in liquid state. Although US20210292520A1 discloses the processability improvement of rubber mixtures comprising a disulfide silane or a mixture of polysulfide silanes and at least a mercaptosilane, no solution is provided to mitigate H₂S emissions.

US6384256 and US6242618 offer examples of attempted solutions to mitigate the H₂S issue, but a method to block the mechanism of H₂S formation in sulfur silanes and their blends and especially in mercapto enriched sulfur silane blends was not known.

Accordingly, there is a need for solutions that can mitigate H₂S emissions from such blends. Likewise, there remains a need for a solution for the problem of polysulfide formation, such as disulfide silane (bis-3-triethoxysilylpropyl disulfide, abbreviated TESPD) formation, in such blends with concomitant decrease in the mercaptosilane, due to altering the composition of the mixture (upon aging).

The technical problem to be solved by the present invention was thus to provide a shelf-stable composition of a sulfur silane and a mercaptan which, when compounded in rubber, improves the performance of a tire tread.

### SUMMARY OF THE INVENTION

The present inventors surprisingly found that when to a blend of a sulfur-containing silane which does not have (free) mercapto functionality and an organic mercapto-functional compound at least one acid of a certain pKa is added, the technical problem of the formation of hydrogen sulfide and the formation of polysulfide by-products on aging can be solved satisfactorily. In accordance with present invention there is thus provided a composition comprising:
(a) one or more sulfur-containing silanes, which do not have a (free) mercapto (HS-) functionality,
(b) one or more organic compounds with (free) mercapto (HS-) functionality,
(c) at least one acid selected from (c1) acids having a pKa, determined in aqueous solution at a temperature of 25°C, of less than 3.75, and (c2) Lewis acids.

### DETAILED DESCRIPTION OF THE PREFERRED EMBODIMENTS OF THE INVENTION

The inventive compositions thus comprise:
(a) one or more sulfur-containing silanes, which do not have a (free) mercapto (HS-) functionality,
(b) one or more organic compounds with (free) mercapto (HS-) functionality,
(c) at least one acid selected from acids having a pKa, determined in aqueous solution at a temperature of 25°C, of less than 3.75, and Lewis acids.

The shelf-stable composition of the invention eliminates almost entirely the formation of hydrogen sulfide and polysulfide by-product on aging.

### Sulfur-containing silanes, which do not have a (free) mercapto (HS-) functionality (component (a))

The inventive compositions comprise one or more sulfur-containing silanes (a), preferably they contain one or two, more preferably one sulfur-containing silane (a).

The sulfur-containing silanes (a) do not have a free mercapto (HS-) functionality, that is, they do not have the functional group HS- (i.e. mercapto group) in their structure. This distinguishes them in particular from the organic compounds with (free) mercapto (HS-) functionality (b) as described below.

Preferably the sulfur-containing silanes, which do not have a mercapto (HS-) functionality, (a), are selected from the group consisting of blocked mercaptosilanes, organosilane polysulfides, and mixtures thereof, more preferably they are selected from blocked mercaptosilanes. Still more preferably they are selected from the group consisting of blocked mercaptosilanes which have both a blocked thiol and an alkoxysilane functionality, and still more preferably they are selected from blocked mercapto-functional alkylalkoxysilanes, that is, (mercaptoalkyl)(alkoxy)silanes.

In some aspects of the composition according to the invention, the sulfur-containing silanes, which do not have a mercapto (HS-) functionality (a), are selected from the group consisting of blocked mercapto silanes of the formula: 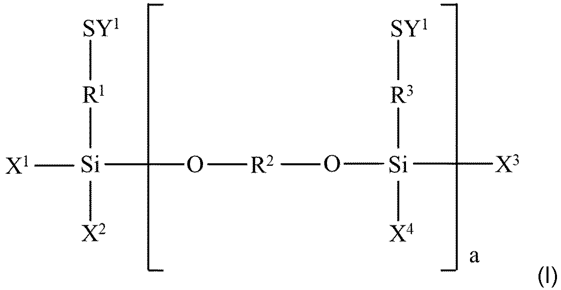
wherein R¹ is independently a linear alkylene group of from 1 to 6 carbon atoms or a branched alkylene group of from 3 to 6 carbon atoms;
each occurrence of R² is a linear alkylene group of from 2 to 8 carbon atoms or a branched alkylene group of from 3 to 8 carbon atoms;
each occurrence of R³ is independently a linear alkylene group of from 1 to 6 carbon atoms or a branched alkylene group of from 3 to 6 carbon atoms;
X¹ is a -OR⁴ group, where R⁴ is an alkyl group of from 1 to 4 carbon atoms, a -OR⁵OH group, where R⁵ is a linear alkylene group of from 2 to 8 carbon atoms or a branched alkylene group of from 3 to 8 carbon atoms, or X¹ is a -OR⁶(OR⁷)_{C}OR⁸, where R⁶ is a straight chain alkylene group of from 2 to 6 carbon atoms or a branched chain alkylene group of from 3 to 6 carbon atoms, preferably 3 carbon atoms, each R⁷ is independently an alkylene group of from 2 to 4 carbon atoms and R⁸ is a straight chain alkyl group of from 1 to 16 carbon atoms or a branched chain alkyl group of from 3 to 16 carbon atoms and c is an integer from 1 to 20;
X² and X³ are independently X¹ or methyl;
each occurrence of X⁴ is independently X¹ or methyl;
each occurrence of Y¹ is -C(=O)R⁹, -C(=S)OR⁹ or -CN wherein each R⁹ is independently a straight chain alkylene group of from 1 to 16 carbon atoms, more preferably from 5 to 11 carbon atoms and even more preferably from 6 to 9 carbon atom, or a branched chain alkylene group of from 3 to 16 carbon atoms, more preferably from 5 to 11 carbon atoms and even more preferably 6 to 9 carbon atoms; and a is an integer of from 0 to 8, with the proviso that
(iii) when X¹ and X² are -OR⁴, then the two -OR⁴ may be bonded together through a covalent bond to form a -OR⁴-R⁴O- group bonded to the same silicon atom which forms a ring structure containing 2 to 8 carbon atoms, two oxygen atoms and a silicon atom; and
(iv) when a is 1 to 8 and X³ and X⁴ are -OR⁴, then the two -OR⁴ groups may be bonded together through a covalent bond to form a -OR⁴-R⁴O- group, which is bonded to the same silicon atom to form a ring structure containing 2 to 8 carbon atoms, two oxygen atoms and a silicon atom.

In some aspects of the composition according to the invention the sulfur-containing silanes, which do not have a mercapto (HS-) functionality (a), are selected from the group consisting of blocked mercapto silanes of the formula (XI), wherein
R¹ is a linear alkylene group of from 1 to 6 carbon atoms or a branched alkylene group of from 3 to 6 carbon atoms, Y¹ is -C(=O)R⁹, -C(=S)OR⁹ or -CN, wherein each R⁹ is independently a straight chain alkylene group of from 1 to 16 carbon atoms, more preferably from 5 to 11 carbon atoms and even more preferably from 6 to 9 carbon atom, or a branched chain alkylene group of from 3 to 16 carbon atoms, more preferably from 5 to 11 carbon atoms and even more preferably 6 to 9 carbon atoms, X¹ is a -OR⁴ group, where R⁴ is an alkyl group of from 1 to 4 carbon atoms, X² and X³ are independently X¹ or methyl, and a is 0.

In some aspects of the composition according to the invention the sulfur-containing silanes, which do not have a mercapto (HS-) functionality (a), are selected from the group consisting of blocked mercapto silanes of the formula (I), wherein
R¹ is independently a linear alkylene group of from 1 to 6 carbon atoms or a branched alkylene group of from 3 to 6 carbon atoms, each occurrence of R² is an linear alkylene group of from 2 to 8 carbon atoms or a branched alkylene group of from 3 to 8 carbon atoms, each occurrence of R³ is independently a linear alkylene group of from 1 to 6 carbon atoms or a branched alkylene group of from 3 to 6 carbon atoms, Y¹ is -C(=O)R⁹, -C(=S)OR⁹ or -CN wherein each R⁹ is independently a straight chain alkylene group of from 1 to 16 carbon atoms, more preferably from 5 to 11 carbon atoms and even more preferably from 6 to 9 carbon atom, or a branched chain alkylene group of from 3 to 16 carbon atoms, more preferably from 5 to 11 carbon atoms and even more preferably 6 to 9 carbon atoms; X¹ and X² are a -OR⁴, where R⁴ is an alkyl group of from 1 to 4 carbon atoms and the two -OR⁴ groups of X¹ and X² are bonded together through a covalent bond to form a -OR⁴-R⁴O- group bonded to the same silicon atom to form a ring structure containing 2 to 8 carbon atoms, two oxygen atoms and a silicon atom group, or each X¹ and X² are a -OR⁵OH group, where R⁵ is a linear alkylene group of from 2 to 8 carbon atoms or a branched alkylene group of from 3 to 8 carbon atom, X³ and X⁴ are independently -OR⁴ group, where R⁴ is an alkyl group of from 1 to 4 carbon atoms, a -OR⁵OH group, where R⁵ is a linear alkylene group of from 2 to 8 carbon atoms or a branched alkylene group of from 3 to 8 carbon atom, with the proviso that when X³ and X⁴ are -OR⁴, then the two -OR⁴ groups may be bonded together through a covalent bond to form a - OR⁴-R⁴O- group bonded to the same silicon atom to form a ring structure containing 2 to 8 carbon atoms, two oxygen atoms and a silicon atom, a is 1 to 8, preferably 1 to 3.

In some aspects of the composition according to the invention the sulfur-containing silanes, which do not have a mercapto (HS-) functionality (a), are selected from the group consisting of blocked mercapto silanes selected from triethoxysilylmethyl thioformate, 2-triethoxysilylethyl thioacetate, 3-triethoxysilylpropyl thiopropanoate, 3-triethoxysilylpropyl thiohexanoate, 3-triethoxysilylpropyl thio-(2-ethyl)-hexanoate, 3-triethoxysilylpropyl thiooctanoate, 3-diethoxymethylsilylpropyl thiooctanoate, 3-ethoxydimethylsilylpropyl thiooctanoate, 3-triethoxysilylpropyl thiododecanoate, 3-triethoxysilylpropyl thiooctadecanoate, 3-trimethoxysilylpropyl thiooctanoate, 3-triacetoxysilylpropyl thioacetate, 3-dipropoxymethylsilylpropyl thiopropanoate, 4-oxa-hexyloxydimethylsilylpropyl thiooctanoate, 3-(2-{3-[2-(4-thia-5-oxo-dodecyl)-5-methyl-[1,3,2]dioxasilinan-2-yloxy]-2-methyl-propoxy}-5-methyl-[1,3,2]dioxasilinan-2-yl)-4-thia-5-oxo-dodecane; 3-(2-{3-[2-(4-thia-5-oxo-dodecyl)-4,4,6-trimethyl-[1,3,2]dioxasilinan-2-yloxy]-2-methyl-propoxy}-4,4,6-trimethyl-[1,3,2]dioxasilinan-2-yl)-4-thia-5-oxo-dodecane; 3-(2-{3-[2-(4-thia-5-oxo-dodecyl)-4,4,6-trimethyl-[1,3,2]dioxasilinan-2-yloxy]-1,1-dimethyl-butoxy}-4,4,6-trimethyl-[1,3,2]dioxasilinan-2-yl)-4-thia-5-oxo-dodecane; 3-({3-[2-thia-3-oxo-decyl)-5-methyl-[1,3,2]dioxasilinan-yloxy]-2-methyl-propoxy}-bis-[3-hydroxy-2-methyl-propoxy]-silanyl)-2-thia-3-oxo-decane; 3-[{3-[{3-bis-(3-hydroxy-2-methyl-propyl)-(4-thia-5-oxo-dodecyl)-silanyloxy]-1-methyl-propoxy}-(3-hydroxy-2-methyl-propoxy)-(4-thia-5-oxo-dodecyl)-silanyloxy]-2-methyl-propan-1-ol; 3-[[3-((3-hydroxy-3-methyl-propoxy)-4-thia-5-oxo-dodecyl)-{3-[2-(4-thia-5-oxo-dodecyl)-5-methyl-[1,3,2]dioxasilinan-2-yloxy]-1-methyl-propoxy}-silanyloxy)-2-methyl-propoxy-(3-hydroxy-2-methyl-propoxy)-4-thia-5-oxo-dodecyl)-silanyl]-2-methylpropan-1-ol; 3-(2-{3-[2-(4-thia-5-oxo-6-ethyl-decyl)-[1,3,2]dioxasilinan-2-yloxy]-propoxy}-[1,3,2]dioxasilinan-2-yl)-4-thia-5-oxo-6-ethyl-decane; 3-({3-[2-thia-3-oxo-octyl)-5-methyl-[1,3,2]dioxasilinan-2-yloxy]-2-methyl-propoxy}-diethoxy]-silanyl)-2-thia-3-oxo-octane; 3-[{3-[{3-bis-(3-hydroxy-2,2-dimethyl-propyl)-(4-thia-5-oxo-dodecyl)-silanyloxy]-2,2-dimethyl-propoxy}-(3-hydroxy-2,2-dimethyl-propoxy)-(4-thia-5-oxo-dodecyl)-silanyloxy]-2,2-dimethyl-propan-1-ol; 3-[{3-[(methyl)-(3-hydroxy-2-methyl-propoxy)-(4-thia-5-oxo-dodecyl)-silanyloxy]-2-methyl-propoxy}-methyl)-(4-thia-5-oxo-dodecyl)-silanyloxy]-2-methyl-propan-1-ol, 3-(triethoxysilyl)propyl thiocyanate and combinations thereof.

In some aspects of the composition according to the invention the sulfur-containing silane, which does not have a mercapto (HS-) functionality (a) is 3-octanoyl thio-1-propyltriethoxysilane (3-triethoxysilylpropyl thiooctanoate).

In some aspects of the composition according to the invention the sulfur-containing silanes (a), which do not have a mercapto (HS-) functionality component, are selected from silanes, comprising at least one polysulfide moiety -Sₓ-, wherein x is an average value from about 2 to about 12, preferably about 2 to about 10, more preferably about 2 to about 8, more preferably about 2 to about 6, more preferably about 2 to about 4, more preferably is about 2 or about 4. In some aspects of the composition according to the invention the sulfur-containing silanes (a), which do not have a mercapto (HS-) functionality component, are selected from the formula (II): 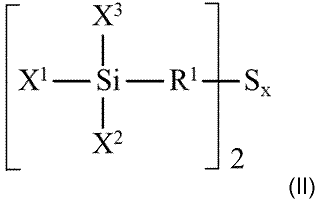
wherein R¹ is a linear alkylene group of from 1 to 6 carbon atoms or a branched alkylene group of from 3 to 6 carbon atoms, preferably of 3 carbon atoms,
X¹, X² and X³ are independently of each other as defined previously, preferably are each ethoxy, and x is as defined previously, preferably x is about 2 or about 4.

In some aspects of the composition according to the invention the sulfur-containing silanes (a) are selected from the group consisting of bis-3-triethoxysilylpropyl disulfide, bis-triethoxysilylpropyl tetrasulfide, and 3-octanoylthio-1-propyltriethoxysilane.

In some aspects of the composition according to the invention the sulfur-containing silanes (a) form the major component relative to the other components based on the weight of the components in the composition.

In some aspects of the composition according to the invention the sulfur-containing silanes (a) form more than 50 wt-% relative to the entire composition. Here and in the entire specification the terms "wt-%" or "wt.-%" mean "weight percent".

In some aspects of the composition according to the invention the composition comprises about 5 to about 95 wt.-%, preferably about 10 to about 95 wt.-%, more preferably about 20 to about 95 wt.-%, more preferably about 30 to about 95 wt.-%, more preferably about 40 to about 95 wt.-%, and still more preferably about 50 to about 95 wt.-% of the one or more sulfur-containing silanes (a), based on the total amount of the composition. The upper limit of the amount of the sulfur-containing silanes (a) can be also about 90 wt.-% or about 85 wt-% based on the total amount of the composition.

### Organic compounds with (free) mercapto (HS-) functionality (b)

The composition according to the invention comprises (b) one or more organic compounds with (free) mercapto (i.e. HS-) functionality.

In some aspects of the composition according to the invention the organic compounds with mercapto(HS-) functionality (b), are chosen from mercaptosilanes.

In some aspects of the composition according to the invention the organic compounds with mercapto(HS-) functionality (b), are chosen from bifunctional silanes that have thiol and alkoxysilane functionalities.

In some aspects of the composition according to the invention the organic compounds with mercapto(HS-) functionality (b), are chosen from mercapto-functional alkylalkoxysilanes.

In some aspects of the composition according to the invention the organic compounds with mercapto (HS-) functionality (b), are selected from mercaptosilanes of the formula (III): 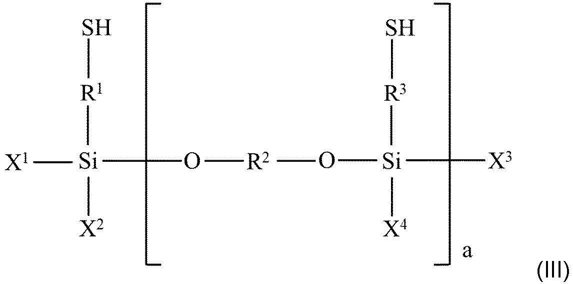
wherein R¹ is independently from each other as defined previously;
each occurrence of R² is independently as defined previously;
each occurrence of R³ is independently as defined previously;
X¹, X², X³ and X⁴ are independently of each other as defined previously, and
a is independently defined as previously.

In some aspects of the composition according to the invention the organic compounds with mercapto (HS-) functionality (b), are selected from mercaptosilanes of the formula (III), and wherein R¹ is a linear alkylene group of from 1 to 6 carbon atoms or a branched alkylene group of from 3 to 6 carbon atoms, X¹ is a -OR⁴ group, where R⁴ is an alkyl group of from 1 to 4 carbon atoms, X² and X³ are independently X¹ or methyl, and the a is 0.

In some aspects of the composition according to the invention the organic compounds with mercapto (HS-) functionality (b), are selected from mercaptosilanes of the formula (III), and wherein
R¹ is independently a linear alkylene group of from 1 to 6 carbon atoms or a branched alkylene group of from 3 to 6 carbon atoms, each occurrence of R² is an linear alkylene group of from 2 to 8 carbon atoms or a branched alkylene group of from 3 to 8 carbon atoms, each occurrence of R³ is independently a linear alkylene group of from 1 to 6 carbon atoms or a branched alkylene group of from 3 to 6 carbon atoms, X¹ and X² are a -OR⁴, where R⁴ is an alkyl group of from 1 to 4 carbon atoms and the two -OR⁴ groups of X¹ and X² are bonded together through a covalent bond to form a -OR⁴-R⁴O- group bonded to the same silicon atom to form a ring structure containing 2 to 8 carbon atoms, two oxygen atoms and a silicon atom group, or each X¹ and X² are a -OR⁵OH group, where R⁵ is a liner alkylene group of from 2 to 8 carbon atoms or a branched alkylene group of from 3 to 8 carbon atom, X³ and X⁴ are independently -OR⁴ group, where R⁴ is an alkyl group of from 1 to 4 carbon atoms, a -OR⁵OH group, where R⁵ is a liner alkylene group of from 2 to 8 carbon atoms or a branched alkylene group of from 3 to 8 carbon atom, with the proviso that when X³ and X⁴ are -OR⁴, then the two -OR⁴ groups may be bonded together through a covalent bond to form a -OR⁴-R⁴O- group bonded to the same silicon atom to form a ring structure containing 2 to 8 carbon atoms, two oxygen atoms and a silicon atom, a is 1 to 8, preferably 1 to 3.

In some aspects of the composition according to the invention the organic compounds with mercapto (HS-) functionality (b), are selected from the group of mercaptosilanes consisting of 3-mercapto-1-propyltriethoxysilane, 2-mercapto-1-ethyltriethoxysilane, mercaptomethyltriethoxysilane, 6-mercapto-1-hexyltriethoxysilane, 4-mercapto-1-butyltriethoxysilane, 1-mercapto-1-ethyltriethoxysilane, 3-mercapto-1-propylmethyldiethoxysilane, 3-mercapto-1-propyldimethylethoxysilane, 3-mercapto-1-propyltrimethoxysilane, 2-mercapto-1-ethyltrimethoxysilane, mercaptomethyltrimethoxysilane, 6-mercapto-1-hexyltrimethoxysilane, 4-mercapto-1-butyltrimethoxysilane, 1-mercapto-1 ethyltrimethoxysilane, 3-mercapto-1-propylmethyldimethoxysilane, 3-mercapto-1-propyldimethylmethoxysilane, 3-mercapto-1-propyltripropoxysilane, 3-mercapto-1-propyltriisopropoxysilane, 3-mercapto-1-propyltributoxysilane, 4-(3,6,9,12,15-penta-oxaoctacosyloxy)-4-ethoxy-5,8,11,14,17,20-hexaoxa-4-silatritriacontane-1-thiol, 3-(2-{3-[2-(3-mercapto-propyl)-5-methyl-[1,3,2]dioxasilinan-2-yloxy]-2-methyl-propoxy}-5-methyl-[1,3,2]dioxasilinan-2-yl)-propane-1-thiol; 3-(2-{3-[2-(3-mercapto-propy)-4,4,6-trimethyl-[1,3,2]dioxasilinan-2-yloxy]-2-methyl-propoxy}-4,4,6-trimethyl-[1,3,2]dioxasilinan-2-yl)-propane-thiol; 3-(2-{3-[2-(3-mercapto-propyl)-4,4,6-trimethyl-[1,3,2]dioxasilinan-2-yloxy]-1,1-dimethyl-butoxy}-4,4,6-trimethyl-[1,3,2]dioxasilinan-2-yl)-propane-1-thiol; 3-({3-[2-mercaptopropyl)-5-methyl-[1,3,2]dioxasilinan-yloxy]-2-methyl-propoxy}-bis-[3-hydroxy-2-methyl-propoxy]-silanyl)-propane-1-thiol; 3-[{3-[{3-bis-(3-hydroxy-2-methyl-propyl)-(3-mercaptopropyl)-silanyloxy]-1-methyl-propoxy}-(3-hydroxy-2-methyl-propoxy)-(3-mercapto-propyl)-silanyloxy]-2-methyl-propan-1-ol; 3-[[3-((3-hydroxy-3-methyl-propoxy)-3-mercapto-propyl)-{3-[2-(3-mercapto-propyl)-5-methyl-[1,3,2]dioxasilinan-2-yloxy]-1-methyl-propoxy}-silanyloxy)-methyl-propoxy-(3-hydroxy-2-methyl-propoxy)-3-mercapto-propyl)-silanyl]-2-methylpropan-1-ol; 3-(2-{3-[2-(3-mercapato-butyl)-[1,3,2]dioxasilinan-2-yloxy]-propoxy}-[1,3,2]dioxasilinan-2-yl)-butane-1-thiol; 3-({3-[2-mercapto-methyl)-5-methyl-[1,3,2]dioxasilinan-2-yloxy]-2-methyl-propoxy}-diethoxy]-silanyl)-methane-1-thiol; 3-[{3-[{3-bis-(3-hydroxy-2,2-dimethyl-propyl)-(3-mercapto-propyl)-silanyloxy]-2,2-dimethyl-propoxy}-(3-hydroxy-2,2-dimethyl-propoxy)-(3-mercapto-propyl)-silanyloxy]-2,2-dimethyl-propan-1-ol; 3-[{3-[(methyl)-(3-hydroxy-2-methyl-propoxy)-(3-mercapto-propyl)-silanyloxy]-2-methyl-propoxy}-methyl)-(3-mercapto-propyl)-silanyloxy]-2-methyl-propan-1-ol, 3-mercaptopropyl-ethyoxyl-di(tridecyl-pentamethoxy)-silane and combinations thereof.

In some aspects of the composition according to the invention the organic compounds with mercapto (HS-) functionality (b), are selected from the group of mercaptosilanes consisting of 3-mercapto-1-propyltriethoxysilane, and 4-(3,6,9,12,15-penta-oxaoctacosyloxy)-4-ethoxy-5,8,11,14,17,20-hexaoxa-4-silatritriacontane-1-thiol.

In some aspects, the composition according to the invention further comprises one or more organic compounds (b) with (free) mercapto (HS-) functionality, which do not comprise silicone or silane moieties, such as alkyl mercaptans like n-octyl mercaptan or tert-dodecanethiol, mercaptoacids and their esters such as those of the formula HS(CH)ₙCOOH wherein n is from 1 to 5, including thioglycolic acid, 3-mercaptopropionic acid, methyl 3-mercaptopropionate, pentaerythritol tetrakis(3-mercaptopropionate), trimethylolpropane tris(3-mercaptopropionate), hydroxy alkyl mercapto compounds such as thioglycerol, 1,3-dimercapto-2-propanol, or aromatic and heteroaromatic mercapto compounds such as mercapto-2-benzothiazole.

In some aspects of the composition according to the invention the composition comprises about 5 to about 95 wt.-%, preferably about 5 to about 90 wt.-%, more preferably about 5 to about 80 wt.-%, more preferably about 5 to about 70 wt.-%, more preferably about 5 to about 60 wt.-%, and still more preferably about 5 to about 50 wt.-% of the one or more the organic compounds with mercapto (HS-) functionality (b), based on the total amount of the composition. The upper limit of the amount of the organic compounds with mercapto (HS-) functionality (b) can be also about 90 wt.-% or about 85 wt-% based on the total amount of the composition.

As mentioned above, it is supposed by the present invention that the stability issues essentially result from the presence of basic components or basic impurities in the components (a) and/or (b), which may result from the manufacturing processes of these components.

The basic components can be present in the silane component (a) or in the mercapto component (b) or in both, in the silane component (a) and in the mercapto component (b). Generally, the major amount (by weight) of the basic components is present in component (a). Accordingly, stabilization of the composition of components (a) and (b) is in particular achieved for those compositions of (a) and (b) comprising at least one basic component or impurity. Such basic component or basic impurity can be any component which is a base, which generally is a substance that can accept protons such as in particular organic bases such as amines, such as trialkyl amines such as tributyl amine or inorganic bases such as hydroxides, sulfides, and hydrosulfides, and also alkoxides for example.

Such basic components can be present in the composition of the invention for example in amounts of the upper limits of up to about 4 wt.-%, preferably up to about 3 wt.-%, more preferably up to about 1 wt-%, still more preferably up to about 0.5 wt-%, still more preferably up to about 0.4 wt-%, still more preferably up to about 0.2 wt-% based on the total amount of the components (a) and (b). Regarding the lower limits, the basic components can be present in component (a) and component (b) for example in an amount of > about 0 wt.-% (">" here and elsewhere means "greater than"), or > about 0.01 wt.-%, or > about 0.1 wt.-% based on the total amount of the components (a) and (b). It is also conceived by the invention that ranges are formed from the upper and lower limits of the basic components indicated such as > about 0.1 to about 4 wt.-% or > about 0.1 to about 0.4 wt.-%.

Furthermore, such basic components can be present in component (a) for example in amounts of the upper limits of up to about 4 wt.-%, preferably up to about 3 wt.-%, more preferably up to about 1 wt-%, still more preferably up to about 0.5 wt-%, still more preferably up to about 0.4 wt-%, still more preferably up to about 0.2 wt-% based on the amount of component (a). Regarding the lower limits, the basic components can be present in component (a) for example in an amount of > about 0 wt.-%, or > about 0.01 wt.-%, or > about 0.1 wt.-% based on the amount of the total amount of the component (a). It is also conceived by the invention that ranges are formed from the upper and lower limits of the basic components indicated such as > about 0.1 to about 4 wt.-% or > about 0.1 to about 0.4 wt.-%.

Furthermore, such basic components can be present in component (b) for example in amounts of the upper limits of up to about 1 wt-%, preferably up to about 0.5 wt-%, more preferably up to about 0.2 wt-%, still more preferably up to about 0.1 wt-%, still more preferably up to about 0.06 wt-%, still more preferably up to about 0.01 wt-% based on the amount of component (b). Regarding the lower limits, the basic components can be present in component (b) for example in an amount of > about 0 wt.-%, or > about 0.001 wt.-%, or > about 0.01 wt.-%, or > about 0.1 wt.-% based on the amount of the total amount of the component (b). It is also conceived by the invention that ranges are formed from the upper and lower limits of the basic components indicated such as > about 0.001 to about 0.5 wt.-% or > about 0.001 to about 0.1 wt.-%, or about 0.001 to about 0.06 wt.-%.

### Acids (c)

The composition of the present invention comprises at least one acid selected from acids (c1) having a pKa, determined in aqueous solution at a temperature of 25°C, of less than 3.75, and (c2) Lewis acids.

In one embodiment the at least one acid (c) comprises one or more acids (c1) having a pKa, determined in aqueous solution at a temperature of 25°C, of less than 3.75.

In one embodiment the at least one acid (c) comprises one or more Lewis acids (c2).

In one embodiment the at least one acid (c) comprises one or more acids (c1) having a pKa, determined in aqueous solution at a temperature of 25°C, of less than 3.75 and one or more Lewis acids (c2) in combination.

The acids (c) were surprisingly found to stabilize the inventive composition comprising sulfur-silanes (a) and mercapto-functional organic compounds (b), in particular, against the formation of hydrogen sulfide and the formation of degradation products increasing the content of e.g. S2 silanes upon storage.

These acids can be used in combination thereof, comprising e.g. more than one acid (c1), more than one acid (c2) or a combination of one or more acid (c1) and one or more than acid (c2).

### Acids (c1) having a pKa, determined in aqueous solution at a temperature of 25°C, of less than 3.75

The pKa is one of the indexes for quantitatively expressing the strength of acid, and is also called the acid dissociation constant defined as reported in the reference CRC Handbook of Chemistry and Physics 95th Edition, section 5, page 94, incorporated by reference here. The pKa of the acids as used in the present invention is the pKa measured in particular in diluted aqueous solutions at a temperature of 25°C. Such pKa values can be determined for example by methods known in the art (see e.g. Jetse Reijenga, Arno van Hoof, Antonie van Loon and Bram Teunissen, Analytical Chemistry Insights 2013:8 53-71, or X Subirats, E Fuguet, M Roses, E Bosch, and C Rafols, http://dx.doi.org/10.1016/B978-0-12-409547-2.11559-8 1 Elsevier Reference Module in Chemistry, Molecular Sciences and Chemical Engineering, (2015)), such as Potentiometry, Conductometry, Spectrophotometry, etc., or also, various data compilations of such pKa values of acids are publicly available, such as pKa Data compiled by R. Williams (see https://organicchemistrydata.org/hansreich/) etc.

It is understood that in the scope of the invention pKa values can include usual deviations through measurement uncertainty such as ± 0.25 pKa units or ± 0.20 pKa units or ± 0.15 pKa units, or ± 0.10 pKa units.

In an aspect of the invention, acids (c1) with a pKa, determined in aqueous solution at a temperature of 25°C, of less than 3.75 are preferably selected from the group consisting of protic acids (proton donors), such as inorganic acids, organic acids and mixtures thereof as exemplified subsequently.

In an aspect of the invention acids (c1) with a pKa, determined in aqueous solution at a temperature of 25°C, of less than 3.75, are selected from protic inorganic acids and organic acids, preferably organic acids such as carboxylic acids, organic sulfonic acids, organic phosphonic acids, organic phosphoric acids etc..

Suitable acids (c) may be generally selected from the group consisting of the following formula (IV):

HₚE_{q}Oᵣ (IV),

wherein
p is ≥ 1, preferably 1 to 4,
q is ≥ 1, preferably 1 to 3,
r is 0 to 6, preferably 0 to 4,
E is independently Ti, Mo, W, Cr, Mn, Tc, Re, Fe, Ru, Os, B, C, Si, Sb, CN, CNO, SCN, N, P, As, Te, S, Se, F, Cl, Br and I.

In an aspect of the invention the acids (c1) are selected from the group consisting of organic acids having at least one acidic functional group A that are preferably selected from the group consisting of:

-C(=O)(-OH);

-C(=S)(-OH);

-S(=O)₂(-OH);

-O-S(=O)₂(-OH);

-S(=O)(-OH);

-O-S(=O)(-OH);

(-O)₂P(=O)(-OH);

-O-P(=O)(-OH);

-O-P(=O)₂(-OH);

and

-O-N(=O)(-OH),

and preferably is a carboxylic acid group (-C(=O)(-OH)-) or a sulfonic acid group (-S(=O)₂(-OH)).

Such organic acids may be of the general formula (V):

R-(A)_{y} (V),

wherein R is an organic group such as an optionally substituted aromatic or aliphatic group which may have up to 30 preferably up to 20 more preferably up to 10 carbon atoms, and which may optionally comprise additional heteroatoms apart from those provided by the acidic functional groups A, such as halogen (F, Cl, Br, I) O, N, S, P, Si, B, etc., and wherein the optional substituent groups are preferably selected from halogen (F, Cl, Br, I ), hydroxy, alkoxy, acyl, cyano, nitro, etc., and wherein
the acidic functional groups A are as defined previously and wherein y is an integer of 1 to 4, preferably, 1 to 3, and more preferably 1 to 2.

In an aspect of the invention the acids (c1) are selected from the group consisting inorganic acids selected from Hydrochloric acid HCl, Nitric acid HNO₃, Phosphoric acid H₃PO₄, Sulphuric acid H₂SO₄, Hydrofluoric acid HF, Hydrobromic acid HBr, Perchloric acid HClO₄, Hydroiodic acid HI, Phosphomolybdic Acid H₅Mo₁₂O₄₁P, Hypophosphorous acid HO₂P, Polyphosphoric acid (H)ₙ₊₂(P)ₙ(O)₃ₙ₊₁, Phosphorous acid H₃O₃P, lodic acid HIO₃, periodic acid H₅IO₆, Hexafluorosilicic acid F₆H₂Si, chloric acid ClHO₃, fuming sulphuric acid H₂O₇S₂, Pyrophosphoric acid H₄O₇P₂, etc.

In an aspect of the invention the acids (c1) are selected from the group consisting organic acids selected from carboxylic, sulfonic, sulfinic, phosphonic, phosphinic and phosphoric acids connected to organic groups, such as alkyl, haloalkyl, perfluoroalkyl, cycloalkyl, alkenyl, aryl, aralkyl or substituted alkyl, cycloalkyl, alkenyl, aryl, aralkyl, optionally containing halides such as F, Cl, Br, I, nitro groups, cyano groups, thiocyano groups, hydroxy groups, sulfhydryl groups, alkoxy groups, alkylthio or arylthio groups, acyl groups, carboxylic ester or acid groups, sulfonate ester or acid groups, and phosphate ester or acid groups as substituents. Preferably the acids are sulfonic or sulfinic acids such as chlorosulfonic acid, trifluoromethanesulfonic acid, methanesulfonic acid, benzenesulfinic acid, 4-dodecylbenzenesulfonic acid, p-toluenesulfonic acid, halogenated such as fluorinated or chlorinated carboxylic acids, such as perfluorobutanoic acid, trifluoroacetic acid, dichloroacetic acid, chloroacetic acid, 2-bromobenzoic acid, phosphorus-based organic acids, such as octylphosphonic acid, 12-mercaptododecylphosphonic acid, carboxylic acids such as oxalic acid, pyruvic acid, 3-oxobutanoic acid, maleic or fumaric acid, 2,3-dihydroxypropanoic acid, citric acid, tartaric acid, cis or trans-1,2-cyclopropanedicarboxylic acid and terephthalic acid, etc. and combinations thereof.

Further examples include: trifluoromethanesulfonic acid, fluorosulfuric acid, salicylic acid , trifluoroacetic acid, tetrafluoroboric acid, salicylic acid, malic acid, 1-naphthalene sulfonic acid, 4-hydroxybenzene sulfonic acid, 1,5-naphthalenedisulfonic acid, 10-campar sulfonic acid, 1-hexane sulfonic acid, aminoethanesulfonic acid, diphenyl phosphate, phenylphosphonic acid, p-nitrobenzene sulfonic acid, 2,2-dichloroacetic acid, 2-hydroxyethanesulfonic acid etc. and combinations thereof.

In an aspect of the invention such acids (c1) with a pKa, determined in aqueous solution at a temperature of 25°C, of less than 3.75 (c), can be also formed *in situ* through the addition of one or more hydrolysable compounds, which forms said acid upon reaction with residual water present in components (a) and (b) of the composition. Said hydrolysable compounds are composed by groups able to stabilize negative charge as a result of a heterolytic bond cleavage comprising halides, F, Cl, Br, I, alkyl, alkenyl or aryl carboxylate ester, alkyl, alkenyl or aryl sulfonate ester, perfluoroalkylsulfonate ester, alkyl, alkenyl or aryl phosphonate ester, connected to groups undergoing nucleophilic attack by water comprising alkyl, acyl, carboxylate ester, sulfonyl, sulfonate ester, phosphoryl, phosphonate ester, thioether group or epoxide rings. Such in situ acid forming compounds include for example acid anhydrides such as maleic anhydride, methanesulfonic acid anhydride, halogen boranes such as dichlorophenylborane, dibutylboron trifluoromethanesulfonate, halogen silanes, such as halogentrialkylsilanes, such as chlorotrimethylsilane, or (3-chloropropyl)trichlorosilane, 1-chloro- acyl halides such as alkanoyl halides, such as octanoyl chloride, sulfonyl halides such as methanesulfonyl chloride, benzyl halides, such as benzyl chloride, halohydrins or epihalohydrins, such as epichlorohydrin, sulfenyl chlorides, sulfuryl or thionyl chlorides, phosphoryl chloride, dimethyl methylphosphonate, etc.. Corresponding chloro compounds will form HCl as acid (c1) and corresponding compounds containing carboxylate group, sulfonate group, perfluorosulfonate group or phosphonate group will form carboxylic, sulfonic, perfluorosulfonic, phosphonic acids as acid (c1).

### Lewis acids (c2)

As is well-known in the art, a Lewis acid is generally a chemical species that contains an empty orbital which is capable of accepting an electron pair from a Lewis base to form a Lewis adduct. According to the present invention such Lewis acids do not include the protic acids according to (c1).

In an aspect of the invention the acid (c) is a Lewis acid (c2) which is preferably selected from group consisting of compounds of lithium (Li) and alkali metals, beryllium (Be), magnesium (Mg) and alkaline earth metals, boron (B), aluminum (Al), silicon (Si), tin (Sn), elements of the d block of the periodic table, such as scandium (Sc), titanium (Ti), vanadium (V), manganese (Mn), chromium (Cr) , iron (Fe), cobalt (Co), and zinc (Zn), lanthanum (La) and lanthanide, preferably the Lewis acid (c2) is an organic boron or titanium compounds.

Examples include Lewis acid compounds containing a metal atom from Group 13, e.g., aluminum-based Lewis acids, such as AlCl₃, boron-based Lewis acids such as boron halides, organic boron compound, such as triorganyl boron, such as triaryl boron, e.g., B(C₆H₅)₃ or B(C₆F₅)₃ and ether adducts thereof.

Further examples include e.g. beryllium fluoride (II), beryllium chloride (II) and beryllium bromide (II); boron compounds such as boron fluoride (III), boron chloride (III), boron bromide (III), boron compounds such as phenyl borane, triphenoxy borane and phenyl dichloroborane; aluminum compounds such as aluminum (III) chloride, aluminum (III) bromide, aluminum (III) iodide, dimethylaluminum chloride, diethylaluminum chloride, methylaluminum dichloride, ethylaluminum dichloride, aluminum compounds such as trimethylaluminum, triethylaluminum, triphenylaluminum, aluminum tri-sec-butylate, aluminum isopropoxide, and the like; silyl compounds such as trimethylsilyl triflate, tert-butyldimethylsilyl triflate, triisopropylsilyl triflate, trimethylsilyliodide, tetraethyl orthosilicate, silicon tetrachloride, tin compounds, such as tin dichloride or tin tetrachloride, organotin compounds, such as dibutyltin acetate, dibutyltin dilaurate and dibutyltin oxide; titanium compounds such as titanium (IV) fluoride, titanium (IV) chloride, titanium (IV) bromide, tin (IV) chloride, tin titanium compounds such as titanium iodide (IV), tetra-alkyl orthotitanates, such as tetra-n-butyl orthotitanate; chromium fluoride (II), chromium fluoride (III), chromium (II) chloride, chromium (III) chloride, chromium bromide (II), chromium bromide (III), iron (II) chloride, iron (III) chloride, iron (III) acetylacetonate, iron (II) bromide, iron (II) iodide, chromium iodide (II); cobalt compounds such as cobalt (II) fluoride, cobalt (II) chloride, cobalt (II) bromide, cobalt (II) iodide, zinc compounds, such as zinc octanoate, zinc stearate and the like. Among the above-mentioned Lewis acids, boron compounds and aluminum compounds are preferable and trialkyl borate such as triethyl borate, tetra-alkyl orthotitanates such as tetra-n-butyl orthotitanate and aluminum alkoxides such as aluminum tri-sec-butylate are particularly preferable.

In an aspect of the invention the acid (c) is e.g., trifluoromethanesulfonic acid, sulfuric acid, trifluoroacetic acid, dichloroacetic acid, chloroacetic acid, and/or citric acid.

Most preferred are sulfonic acids such as methanesulfonic acid or 4-dodecylbenzenesulfonic acid.

In an aspect of the invention the acid (c1) preferably has a pKa of less than 3.5, or less than 3.0, or less than 2.5, or less than 2.0, or less than 1.5, or less than 1.0.

In an aspect of the invention the acid (c1) is selected from the group consisting of phosphoric acid, pyrophosphoric acid, phosphonic acid, polyphosphoric acid, methane sulfonic acid, benzene sulfonic acid, ethane sulfonic acid, propane sulfonic acid, butane sulfonic acid, toluene sulfonic acid, xylene sulfonic acid, sulfosalicylic acid, sulfamic acid, benzene disulfonic acid, cumene sulfonic acid, sulfosalicylic acid, naphthalene mono- or di-sulfonic acid, sulfosuccinic acid, isethionic acid, and phosphorous based acids (e.g. phosphoric acid, pyrophosphoric acid, phosphonic acid, polyphosphoric acid), nitric acid, sulfuric acid, and hydrochloric acid, and combinations thereof.

In an aspect of the invention the acid (c1) is selected from the group consisting of benzenesulfonic acid, chloric acid, chromic acid, fluoroboric acid, fluorosulfuric acid, hexafluorophosphoric acid, hydrochloric acid, hydrobromic acid, hydroiodic acid, methanesulfonic acid, nitric acid, p-toluenesulfonic acid, perchloric acid, periodic acid, permanganic acid, sulfuric acid, trifluoromethanesulfonic acid, and combinations thereof.

In an aspect of the invention the acid (c1) is selected from the group of hydrochloric, -bromic and -iodic acid, chlorous acid, chloric acid, perchloric acid, iodic acid, periodic acid, perchromic acid, nitric acid, phosphoric acid, phosphorous acid, hypophosphorous acid, diphosphoric acid, selenic acid, selenous acid, sulfurous acid, sulfuric acid, hydrogen sulfates, thiocyanic acid, phosphoric acid methyl, ethyl, n-propyl, n-butyl, dimethyl, di-(n-propyl), di-(n-butyl) and di-(2-ethylhexyl) ester, methanesulfonic acid, p-toluenesulfonic acid, 2,6-dihydroxybenzoic acid, amidosulfonic acid, nitroacetic acid, trimethylammoniumacetic acid, dichloro-, difluoro-, tribromo-, trichloro- and trifluoroacetic acid, malonic acid, maleic acid, bromomaleic acid, chloromaleic acid, chlorofumaric acid, bromofumaric acid, oxalic acid, oxaluric acid, oxanilic acid, 4-nitrobenzoic acid, protonated amino acids having a pKa of <2.5 and combinations thereof.

In an aspect of the invention the acid (c) is used in solid form or in liquid form or in gaseous form. Among the mentioned forms, the liquid form is preferable. These states of aggregation are expediently the states of aggregation at room temperature (25° C) and normal pressure (1013.25 mbar).

In an aspect of the invention the acid (c) is used in a form having a concentration equal or higher than about 98 wt-%, preferably the remainder being water.

In an aspect of the invention the acid (c) is used in a form having a concentration of at least about 30 wt-%, preferably at least about 50 wt.-%, more preferably at least about 70 wt.-%, more preferably at least about 90 wt.-%, and still more preferably at least about 98 wt-%, based on the total amount of the acid, the remainder being preferably water.

In an aspect of the invention the acid (c) is used in a form having a concentration of about 50 wt-% to about 99 wt-%, wherein the water content is up to 2 wt-%, preferably up to 0.1 wt.-% and wherein the remainder is another component preferably selected from a solvent, an oil, other acids than component (c), acid anhydrides, and acid esters.

In an aspect of the invention the acid (c) is used in an amount capable of reducing the formation of H₂S in a composition comprising components (a) and (b) upon storage, e.g. relative to a composition that does not comprise the acid (c).

In aspect of the invention the amount of acid (c) is preferably such that the pH of the composition, measured by hydro-alcoholic method as shown below, is between 4 and 7, more preferably between 4 and 6, even more preferably between 5 and 6.

In an aspect of the invention the acid (c) is used in an amount of about 0.01 to about 5 wt.-%, preferably of about 0.01 to about 4 wt.-%, more preferably of about 0.01 to about 3 wt.-%, more preferably about 0.01 to about 2 wt.-%, more preferably about 0.01 to about 1 wt.-%, more preferably about 0.01 to about 0.5 wt.-%, and more preferably about 0.01 to about 0.1 wt.-% based on the total amount of the composition.

### Further acids

In an aspect of the invention the composition optionally comprises one or more acids with 3.75 ≤ pKa ≤ 7, such as acetic acid, hexanoic acid, cyclohexanoic acid, heptanoic acid, octanoic acid, 4-methyl octanoic acid, 2-methylhexanoic acid, nonanoic acid, decanoic acid, benzoic acid and 4-methoxy benzoic acid etc..

In an aspect of the invention the composition optionally comprises one or more hydrolysable compounds that form acids with 3.75 < pKa < 7 *in situ* upon reaction with residual water present in components (a) and (b) of the composition. Such compounds include for example esters, such as ethyloctanoate, lactones, such as gamma-butyrolactone, delta-valerolactone or lactide, lactams, such as epsilon-caprolactam, carbonate esters, such as propylene carbonate, ethylene carbonate or diethylcarbonate, acid anhydrides, such as succinic anhydride, glycidyl esters, such as glycidyl methacrylate and combinations thereof.

Silanes that do not contain sulfur (d)

In some aspects the composition according to the invention further comprises one or more silanes, which do not contain sulfur, such as alkoxy silanes such as (alkoxy)(alkyl)silanes, such as Si(OEt)₄, MeSi(OEt)₃, MeSi(OCH₂CH₂OMe)₃, ViSi(OEt)₃, ViSi(OCH₂CH₂OMe)₃, PhSi(OEt)₃, PhSi(OCH₂CH₂OEt)₃, 3-methacryloxypropyltriethoxysilane, 3-chloropropyltriethoxysilane, CH₃(CH₂)₂Si(OEt)₃, CH₃(CH₂)₇Si(OEt)_{3,} bis(triethoxysilyl)octane, etc.

### Composition features

### Hydroalcoholic pH

In some aspects the composition according to the invention has a hydroalcoholic pH of a solution at 25°C of below about 7, preferably between about 3 and about 7, more preferably between about 4 and about 6, and even more preferably between about 5 and about 6. The hydroalcoholic pH is generally measured at 25°C by using a pH-meter, comprising preferably a pH-responsive glass electrode and a silver-silver chloride electrode as reference. First, a 2:1 by volume solution of isopropanol and deionized water (hydro-alcoholic solution) is prepared, and 60 mL are added in a beaker. The pH is adjusted to 7 by using 0.01M NaOH and 0.01M HCl solutions in water. Then, 10 g of the composition is dissolved into the hydro-alcoholic solution under stirring and, afterwards, the pH is measured.

### Composition ranges

In some aspects the composition according to the invention, comprises:
about 5 to about 95 wt.-%, preferably about 50 to about 95 wt.-% of the one or more sulfur-containing silanes (a),
about 5 to about 95 wt.-%, preferably about 5 to about 50 wt.-% of the one or more organic compounds (b), and
about 0.01 to about 5 wt.-%, preferably about 0.01 to about 2 wt.-%, more preferably about 0.01 to about 1 wt.-%, still more preferably about 0.01 to about 0.1 wt.-%, of at least one acid (c),
the percentages each being based on the total amount of the composition.

In some aspects the composition according to the invention, the weight ratio of compound (a) to compound (b) is about >1 : 1 to about 50 : 1 w/w, preferably about 50/50 w/w to about 90/10 more preferably about 60/40 to about 80/20, even more preferably about 70/30 to about 80/20, most preferably 75/25 w/w or preferably within +/- 5 wt% of this ratio.

In some aspects of the composition according to the invention, the weight ratios of compound (a) to compound (b) are selected from
- about 75 to about 25,
- about 4.8 to about 1.6,
- about 7 to about 0.35,
- about 6.25 to about 0.7,
- about 5.75 to about 1,
- about 5.2 to about 1.3,
- about 4.4 to about 1.9,
- about 3.6 to about 2.4,
- about 3 to about 1, or
- about 2.85 to about 3.15.

In some aspects the composition according to the invention, the composition consists or consists essentially of:
(a) one or more sulfur-containing silanes, which do not have a (free) mercapto (HS-) functionality,
(b) one or more organic compounds with (free) mercapto (HS-) functionality,
(c) at least one acid selected from acids having a pKa, determined in aqueous solution at a temperature of 25°C of less than 3.75, and one or more Lewis acids,
where components (a) and (b) may comprise basic components or basic impurities as described in more detail before.

In some aspects the composition according to the invention, the concentration of H₂S determined by gas chromatography-headspace analysis is less than 300 ppm, preferably less than 200 ppm, more preferably less than 100 ppm, and even more preferably less than 50 ppm.

Preferably the concentration of H₂S determined by gas chromatography-headspace analysis is less than 300 ppm, preferably less than 200 ppm, more preferably less than 100 ppm, and even more preferably less than 50 ppm, after storage of the composition of the invention for at least 1 day, or at least 2 days or at least 3 days or at least 4 days or at least 5 days or at least 6 days or at least 7 days, or at least 30 days or at least 60 days or at least 120 days or at least 365 days.

Preferably the concentration of H₂S determined by gas chromatography-headspace analysis is less than 300 ppm, preferably less than 200 ppm, more preferably less than 100 ppm, and even more preferably less than 50 ppm, after storage of the composition of the invention in between -20°C and 130°C, preferably between 0°C and 50°C, more preferably between 10°C and 40°C, even more preferably between 20°C and 30°C.

In some aspects the composition according to the invention does not contain a rubber component, since it will be usually used, produced and sold in this form.

In a further aspect the composition according to the invention further comprises one or more additives such as conventional rubber additives.

### Method of production

In a further aspect the composition is prepared by a method for the manufacture of the composition according to the invention, comprising at least one step of combining or contacting or mixing the components (a), (b) and/or (c).

In a further aspect the composition is prepared by a method for the manufacture of the composition according to the invention comprising the steps of
(i) combining one or more sulfur-containing silanes (a), with at least one acid (c) and then with one or more organic compounds (b), or
(ii) combining one or more organic compounds (b) with at least one acid (c) and then with one or more sulfur-containing silanes (a).

In some aspects in a method for the manufacture of the composition according to the invention, the components (a), (b) and (c) are contacted at a temperature suitable for mixing, preferably about 10°C to about 40°C, more preferably about 20°C to about 40°C, even more preferably about 20°C to about 30°C in a stirred container, up to about one hour, preferably half an hour. In some aspects in a method for the manufacture of the composition according to the invention at least one acid (c) is added in the manufacture of the sulfur-containing silanes (a), or in the manufacture of the organic compounds (b) by means of a unit operation comprising raw material treatment, mixing, reaction steps, washing steps, purification steps, filtration steps, heat treatments and post-production treatments.

In a further aspect of the invention, it relates to a method for reducing the hydrogen sulfide emissions of sulfur-containing silane compositions comprising the step of adding to said compositions an effective amount of least one acid selected from acids having a pKa, determined in aqueous solution at a temperature of 25°C of less than 3.75, and Lewis acids, each as described previously. In such method for reducing the hydrogen sulfide emissions of sulfur-containing silane compositions according to the invention, said acid is preferably added in an amount of about 0.01 to about 5 wt.-% based on the total weight of the composition.

### Use in a Rubber composition

In a further aspect of the invention, it relates to the use of the composition according to invention as an additive for rubber compositions, comprising filler such as carbon black or silica, preferably silica.

Such rubber compositions, preferably comprises a filler such as silica and one or more compositions according to the invention, and include for example rubber compositions, comprising:
(A) at least one diene-based polymer;
(B) a filler such as precipitated silica, preferably with a BET surface or 50 m²/g or more determined e.g. according to ISO 9277;
(C) at least one composition according to the inventions as defined above;
(D) at least one deblocking agent;
(E) a vulcanizing package comprising at least one vulcanizing agent comprising sulfur and at least one accelerator; and
(F) at least one scorch modifier.

The at least one diene based polymer (A) includes e.g. a diene based polymer containing at least one functional group, a diene based polymer containing no functional group, and combinations thereof or a combination of a diene based polymer containing at least one functional group and a diene based polymer containing no functional group, or at least one diene based polymer which is a diene based polymer containing at least one functional group, e.g. selected from at least one functional group which is selected from the group consisting of amino groups, alkoxysilyl groups, stanyl groups, hydroxyl groups, thiol groups, sulfido group, thioisocyanato group, isocyanato groups, imino groups, pyridino groups, epoxy group, thioepoxy groups, thioketone groups, ketone groups, ketimine groups, isocyanuric acid groups, amido groups, silazano groups, hydroxysilyl (silanol) groups, siloxane groups, phthalocyanino groups, silane-sulfide groups, carboxylic acid groups, carboxylic acid ester groups, and combinations thereof.

A rubber composition may comprise:
(i) about 100 parts of rubber, where the weight of the rubber is the sum of the weights of each diene-based polymer containing at least one function group used in the formulation and the sum of the weights of each diene-based polymer used in the formulation which does not contain at least one functional group;
(ii) about 5 to about 140 parts by weight per 100 parts rubber (i) of precipitated silica;
(iii) about 1 to about 20 parts by weight per 100 parts rubber (i) of the inventive composition as defined previously;
(iv) about 0.1 to about 20 parts by weight per 100 parts rubber (i) a conventional deblocking agent;
(v) about 0.1 to about 10 parts by weight per 100 parts rubber (i) a conventional vulcanization package comprising sulfur and at least one accelerator; and
(vi) about 0.1 to about 5 parts by weight per 100 parts rubber (i) a conventional scorch modifier.

In a further aspect of the invention, it relates to vulcanized articles made from the rubber compositions of the rubber composition according to the invention.

### Explanations

As used above, and throughout the description, the following terms, unless otherwise indicated, shall be understood to have the following meanings.

As used herein, the term "about" encompasses the range of experimental error that occurs in any measurement.

Furthermore, "and/or", where used herein, is to be taken as specific disclosure of all of the components or features indicated or one or any combination of one or more components or features. E.g. a, b and/or c, includes a, b, c, ab, ac, bc and abc.

The expression "blocked mercaptosilane(s)" shall be understood to include partial hydrolysates. Partial hydrolysates of blocked mercaptosilanes result from some methods of their manufacture and/or can occur upon their storage, especially under humid conditions. The term "filler" means a substance that is added to the diene-based polymer (rubber) to either extend the rubber or to reinforce the elastomeric network. Reinforcing fillers are materials whose moduli are higher than the diene-based polymer of the elastomeric composition and are capable of absorbing stress from the diene-based polymer when the elastomer is strained. Fillers include fibers, needles, nanotubes, particulates, and sheet-like structures and can be composed of inorganic minerals, silicates, silica, clay, ceramics, carbon, organic polymer and diatomaceous earth.

The term, "organic" such as "organic group" or "organic compound" refers to any chemical structure containing one or more carbon atoms, hydrogen and optionally one or more heteroatoms such as N, O, S, Si, P, B or the like.

The term "hydrocarbon" or "hydrocarbyl group" as used herein refers to any chemical structure containing hydrogen atoms and carbon atoms, and optionally one or more hetero atom such as N, O, S, Si, P, B or the like.

As used herein, "alkyl" preferably includes straight, branched and cyclic substituted or unsubstituted alkyl groups; "alkenyl" preferably includes any straight, branched or cyclic substituted or unsubstituted alkyl groups alkenyl group containing one or more carbon-carbon double bonds where the point of substitution can be either at a carbon-carbon double bond or elsewhere in the group; and, "alkynyl" preferably includes any straight, branched or cyclic substituted or unsubstituted alkyl groups alkynyl group containing one or more carbon-carbon triple bonds and, optionally, one or more carbon-carbon double bonds where the point of substitution can be either at a carbon-carbon triple bond, a carbon-carbon double bond or elsewhere in the group.

Specific, non-limiting examples of substituted or unsubstituted alkyl groups include methyl, ethyl, propyl and isobutyl, and halogenalkyl groups. Specific, non-limiting examples of alkenyls include vinyl, propenyl, allyl and methallyl. Specific, non-limiting examples of alkynyls include acetylenyl, propargyl and methylacetylenyl.

As used herein, "aryl" or "aromatic group" includes any substituted or unsubstituted aromatic hydrocarbon from which one hydrogen atom has been removed; "aralkyl" includes any of the aforementioned alkyl groups in which one or more hydrogen atoms have been substituted by the same number of like and/or different aryl (as defined herein) substituents; and "arenyl" includes any of the aforementioned aryl groups in which one or more hydrogen atoms have been substituted by the same number of like and/or different alkyl (as defined herein) substituents. Specific, non-limiting examples of aryl groups include phenyl and naphthalenyl. Specific, non-limiting examples of aralkyl groups include benzyl and phenethyl. Specific, non-limiting examples of arenyl groups include tolyl and xylyl.

As used herein, "alkylene" is a divalent saturated aliphatic substituted or unsubstituted radical derived from an alkane by removal of two hydrogen atoms.

Optional substituents of organic groups such as aromatic or aliphatic groups may include halogen such as F, Cl, Br, I, hydroxy, alkoxy, acyl, amino, etc.

Other than in the working examples or where otherwise indicated, all numbers expressing amounts of materials, reaction conditions, time durations, quantified properties of materials, and so forth, stated in the specification and claims are to be understood as being modified in all instances by the term "about".

The invention may be better understood by reference to the following examples in which the parts and percentages are by weight unless otherwise indicated.

### EXAMPLES

### METHODS

The compositions of the silane raw materials as well as the compositions of the blends were determined by gas chromatography (GC). Chemical structures were confirmed by mass spectrometry (GC-MS). Heptadecane (CAS# 629-78-7) from Sigma-Aldrich was used as the internal standard.

The amount of H₂S generated from the neat silanes or silane blends was determined by GC-headspace (GC-HS) analysis (indicated in the following as "H₂S-HS"). A sample of 5 g of the composition was weighted and sealed in a suitable vial, preferably a 20 mL headspace-glass vial with long neck, heated up to 50 °C for an hour and the gas in the headspace of the vial was sampled, injected and measured by using an automated sequence.

The hydroalcoholic pH indicated of the silanes blends with added acids was measured at room temperature (25°C) by using a pH-meter, comprising preferably a pH-responsive glass electrode and a silver-silver chloride electrode as reference. First, a 2:1 by volume solution of isopropanol and deionized water was prepared, and 60 mL were added in a beaker. The pH was adjusted to 7 by using 0.01M NaOH and 0.01M HCl solutions in water. Then, 10g of the silane blend was dissolved into the hydro-alcoholic solution under stirring and, afterwards, pH was measured.

### EXAMPLE 1

Blends of 75%wt. (3-Octanoylthio-1-propyltriethoxysilane, abbreviated as OTPTES): 25%wt. (mercaptopropyltriethoxysilane, abbreviated as MPTES) were prepared by adding 3.75 g of OTPTES and 1.25 g of MPTES in a 20 mL vial suitable to run GC-HS analysis. Each vial was sealed and then agitated by means of an orbital shaker at 300 rpm for 5 min.

Ternary blends according to the invention OTPTES/MPTES/DBSA (3-Octanoylthio-1-propyltriethoxysilane/ mercaptopropyltriethoxysilane/ DBSA (4-Dodecylbenzenesulfonic acid)) were prepared by first adding DBSA in different percentages by weight with respect to the total mass of the three-component blend in a 40 mL glass vial containing OTPTES in an amount equal to 75 %wt. of the OTPTES/MPTES silane blend. The vial was closed and then agitated by means of an orbital shaker at 300 rpm for 5 min. Afterwards, an amount of MPTES equal to 25 %wt. of the OTPTES/MPTES silane blend was added to the same vial containing the acidified OTPTES. The vial was closed and again agitated by means of an orbital shaker at 300 rpm for 5 min. In a typical experiment, targeting 0.1 %wt. DBSA of the total mass of the ternary blend, 0.03 g DBSA were added in 22.48 g OTPTES and afterwards 7.49 g MPTES were added to the acidified OTPTES, following the procedure described above. For each blend containing different percentages of DBSA, the hydro-alcoholic pH was measured and a GC analysis was carried out. Afterwards, 5 g samples from each blend were taken into a 20 mL vial suitable to run GC-HS analysis, the vial was sealed and samples were aged in an oven at 50 °C from 7 days up to 30 days. Both freshly prepared and aged samples were submitted to GC-HS and GC analyses. As a reference, similar data was collected for the starting silanes, both OTPTES and MPTES. In this case, 5 g of silane was used for the GC-HS analysis. Table 1 shows the effect of the addition of a strong sulfonic acid, such as DBSA, in mitigating H₂S emissions from a 75 %wt. OTPTES: 25 %wt. MPTES silane blend (see Runs No. 1 and 2), while their 75:25 w/w mercapto-enriched blend builds up H₂S-HS from 261 ppm in 7 days up to 547 ppm in 30 days at 50 °C (see Run No. 3). As the percentage of DBSA increases in the blend, the hydro-alcoholic pH decreases and it consistently drops from 6.16 (see Run No. 4) all the way to 4.71 (see Run No.5). The corresponding amount of H₂S-HS at 30 days of aging dramatically decreases as the pH drops, all the way to 25 ppm at pH = 4.71 (see Run No.5).

**TABLE 1 Inventive examples of blocked mercaptosilane/ mercaptosilane/ DBSA (OTPTES/MPTES) (3-Octanoylthio-1-propyltriethoxysilane / mercaptopropyltriethoxysilane / DBSA)**

| Run No. | Amount (%wt.) in the blend | | | Kind of example | Hydroalcoholic pH | Amount of H₂S-HS at 50 °C in ppm | | |
|---|---|---|---|---|---|---|---|---|
| | Blocked mercaptosilane^{a} (compound (a)) | Mercaptosilane^{b} (compound (b)) | DBSA^{c} (compound (c) | | | 0 days | 7 days | 30 days |
| 1 | 100 | 0 | 0 | - | 8,85 | 4,8 | 7,1 | 13,1 |
| 2 | 0 | 100 | 0 | - | 7,99 | 5,5 | 11,7 | 13,1 |
| 3 | 75 | 25 | 0 | comparative | 8,63 | 11,6 | 261,2 | 546,7 |
| 4 | 74,83 | 24,93 | 0,24 | inventive | 6,16 | 12,0 | 13,1 | 23,4 |
| 5 | 74,83 | 24,93 | 0,25 | inventive | 4,71 | 14,6 | 15,6 | 25,4 |
| ^{a}3-octanoylthio-1-propyltriethoxysilane, as NXT* Silane from Momentive | | | | | | | | |
| ^{b}3-mercaptopropyltriethoxysilane, as SILQUEST* A-1891 Silane from Momentive | | | | | | | | |
| ^{c}4-dodecylbenzenesulfonic acid (DBSA) from Sigma-Aldrich | | | | | | | | |

Table 2 shows the result of analysis of runs 3 and 4 from Table 1 revealing that organosilane disulfide TESPD forms in situ and its content increases from 0.15 %wt. up to 0.28 %wt. when comparing the composition of the blend after 30 days at 50°C of aging with the composition of the same blend as made (Run No. 3 of Table 1). The composition of the silane blend containing 0.24 %wt. DBSA (Run No. 4) is acceptably stable upon aging at 50 °C for 30 days and only a slight decrease in the content of TESPD organosilane disulfide is observed compared to the simple blend without the acid (Run No. 3).

**TABLE 2 Stabilization of the organosilane disulfide content in blends added with DBSA**

| Property | Unit | Run No. 3 | Run No. 3 | Run No. 4 | Run No. 4 | Run No. 4 |
|---|---|---|---|---|---|---|
| | | from Table 1 | from Table 1 | from Table 1 | from Table 1 | from Table 1 |
| | | As made | 30 days at 50 °C | As made | 7 days at 50 °C | 30 days at 50 °C |
| | | 0 days at 25 °C | | 0 days at 50 °C | | |
| Mercaptosilane^{a} | % wt. | 25,18 | 24,52 | 24,72 | 24,60 | 24,60 |
| Organosilane disulfide^{b} | % wt. | 0,15 | 0,28 | 0,14 | 0,13 | 0,13 |
| ^{a}3-mercaptopropyltriethoxysilane, as SILQUEST* A-1891 Silane from Momentive | | | | | | |
| ^{b}bis-3-triethoxysilylpropyl disulfide formed in situ | | | | | | |

### EXAMPLE 2

Blends of OTPTES/MPTES containing a different amount of MPTES were prepared by using a procedure like the one reported in the Example 1. In a typical experiment, targeting 50 %wt. MPTES in the OTPTES/MPTES silane blend, 2.50 g of OTPTES and 2.50 g of MPTES were added in a 20 mL vial suitable to run GC-HS analysis.

Ternary blends of OTPTES/MPTES/DBSA containing a different amount of MPTES were also prepared by using a procedure like the one reported in the Example 1.

Table 3 shows the variation of the H₂S-HS build up in OTPTES/MPTES blends containing an increasing amount of MPTES. A maximum of 1391 ppm for the H₂S-HS at 30 days of aging was achieved by the 50 %wt. OTPTES: 50 %wt. MPTES silane blend (see Run No. 8). Any of the respective ternary composition obtained by addition of DBSA shows less H₂S-HS already in the samples as made/prepared and a dramatical reduction of the H₂S build up is also observed, as for the 50:50 w/w mercapto-enriched blend added with DBSA (Run No. 13) having a content of H₂S-HS after 30 days at 50°C of 33 ppm (98% reduction with respect to Run No. 8).

**TABLE 3 Examples for different ratios of mercaptan to blocked mercaptan**

| Ru n No. | Amount (%wt.) in the blend | | | Kind of example | Hydroalcoholic pH | Amount of H₂S-HS at 50 °C in ppm | | |
|---|---|---|---|---|---|---|---|---|
| | Blocked mercaptosilane^{a} (compound (a)) | Mercaptosilane^{b} (compoun d (b)) | DBSA^{c} (compound (c)) | | As made 0 days at 25 °C | 0 days | 7 days | 30 days |
| 6 | 90 | 10 | 0 | comparative | 8,82 | 7,8 | 76,0 | 232,3 |
| 7 | 75 | 25 | 0 | comparative | 8,72 | 13,9 | 416,2 | 607,8 |
| 8 | 50 | 50 | 0 | comparative | 8,43 | 37,7 | 952,3 | 1391,2 |
| 9 | 25 | 75 | 0 | comparative | 8,25 | 30,8 | 587,1 | 890,8 |
| 10 | 10 | 90 | 0 | comparative | 8,13 | 19,8 | 219,4 | 257,4 |
| 11 | 89,75 | 9,97 | 0,28 | inventive | 4,46 | 4,4 | 3,7 | 6,8 |
| 12 | 74,81 | 24,94 | 0,25 | inventive | 4,23 | 6,5 | 9,8 | 28,4 |
| 13 | 49,90 | 49,90 | 0,20 | inventive | 3,83 | 8,1 | 16,1 | 33,5 |
| 14 | 24,96 | 74,88 | 0,15 | inventive | 3,71 | 10,7 | 11,4 | 19,4 |
| 15 | 9,99 | 89,89 | 0,13 | inventive | 3,63 | 7,3 | 12,7 | 15,3 |
| ^{a}3-octanoylthio-1-propyltriethoxysilane, as NXT* Silane from Momentive | | | | | | | | |
| ^{b}3-mercaptopropyltriethoxysilane, as SILQUEST* A-1891 Silane from Momentive | | | | | | | | |
| ^{c}4-dodecylbenzenesulfonic acid (DBSA) from Sigma-Aldrich | | | | | | | | |

### EXAMPLE 3

Blends of polysulfide silanes e.g., TESPD and bis-3-triethoxysilylpropyl tetrasulfide, abbreviated as TESPT (compound (a)) and MPTES (compound (b)) as a mercapto silane were prepared by using a procedure similar to the one reported in the Example 1. In a typical experiment targeting a 75 %wt. TESPD: 25%wt. MPTES silane blend, 3.75 g of TESPD and 1.25 g of MPTES were added in a 20 mL vial suitable to run GC-HS analysis.

Ternary blends of TESPD/MPTES/DBSA (polysulfide as compound (a)/ mercaptosilane as (b)/ DBSA as compound (c) and TESPT/MPTES/DBSA (polysulfide as compound (a)/ mercaptosilane as (b)/ DBSA as compound (c) were also prepared by using a procedure similar to the one reported in the Example 1.The acid was first added in a vial containing TESPD or TESPT in amount equal to 75 %wt. of the TESPD/MPTES or TESPT/MPTES silane blend. Afterwards an amount of MPTES equal to 25 %wt. of the TESPD/MPTES or the TESPT/MPTES silane blend was added to the same vial containing the acidified TESPD or the acidified TESPT, respectively. In a typical experiment 3.70 g TESPD were first mixed with 0.06 g DBSA in a 20 mL vial suitable to run GC-HS analysis. Afterwards 1.23 g MPTES were added to the acidified TESPD. In case of the TESPT/MPTES/DBSA blend 3.58 g TESPT were first mixed with 0.23 g DBSA and afterwards. 1.19 g MPTES were added to the acidified TESPT. Both freshly prepared samples and samples aged up to 7 days in an oven at 50 °C were submitted to GC-HS analysis. As a reference, similar data was collected for the starting silanes both TESPD and TESPT. In this case, 5 g or silane was used for the GC-HS analysis. The stabilization effect of the acid addition was demonstrated also for mercapto-enriched blends of polysulfide silanes. Table 4 shows that 75:25 w/w mercapto-enriched blends (see Runs No. 18 and 19) readily generate more than 1 %wt. H₂S when exposed to temperatures as high as 50 °C even though the neat silanes TESPD and TESPT are more stable in the same conditions (see Runs No. 16 and 17). The removal of the alkalinity in commercial TESPD/MPTES blends dramatically stabilizes also mercapto-enriched polysulfide silane blends.

**TABLE 4 Inventive examples of organosilane polysulfide/ mercaptosilane/ DBSA**

| Run No. | Amount (%wt.) in the blend | | | | Kind of example | Amount of H₂S-HS at 50 °C in ppm | | |
|---|---|---|---|---|---|---|---|---|
| | Organosilane polysulfide^{a} (compound (a)) | Organosilane polysulfide^{b} (compound (a)) | Mercaptosilane^{c} (compound (b)) | DBSA^{d} (compound (c)) | | 0 days | 7 days | 30 days |
| 16 | 100 | 0 | 0 | 0 | - | 116,7 | 107,4 | 287,3 |
| 17 | 0 | 100 | 0 | 0 | - | 14,1 | 13,1 | 12,1 |
| 18 | 75 | 0 | 25 | 0 | Comparative | >10000 | >10000 | >10000 |
| 19 | 0 | 75 | 25 | 0 | Comparative | >10000 | >10000 | >10000 |
| 20 | 74,05 | 0,00 | 24,69 | 1,26 | Inventive | 72,6 | 20,3 | 3,7 |
| 21 | 0,00 | 71,55 | 23,85 | 4,60 | Inventive | 21,5 | 52,2 | 32,6 |
| ^{a}bis-3-triethoxysilylpropyl disulfide, as SCA-985 from Struktol | | | | | | | | |
| ^{b}bis-3-triethoxysilylpropyl tetrasulfide, as SCA-98 from Struktol | | | | | | | | |
| ^{c}3-mercaptopropyltriethoxysilane, as SILQUEST* A-1891 Silane from Momentive | | | | | | | | |
| ^{d}4-dodecylbenzenesulfonic acid (DBSA) from Sigma-Aldrich | | | | | | | | |

### EXAMPLE 4

Blends of OTPTES, MPTES, and methane sulfonic acid (MSA) were prepared at different methanesulfonic acid ppm levels, by using a procedure similar to the one reported in the Example 1. Both freshly prepared and aged samples were submitted to GC-HS and GC analyses.

Table 5 shows a similar trend for H₂S-HS data at 30 days of aging as a function of the amount of MSA added to a 75 %wt. OTPTES: 25 %wt. MPTES silane blend compared to the data in Table 1. The amount of H₂S-HS from such blends is dramatically lower (Runs No. 23, 24 and 25) when compared to the simple blend (Run No. 22). In addition,
Table 6 shows that the composition of the acidified silane blend (see Run No. 24) is also acceptably stable upon aging at 50 °C for 30 days and no increase in the content of TESPD silane is observed compared to the simple blend (Run No. 22).

Table 7 shows a reduction of 99% of the formation of hydrogen sulfide up to 365 days for samples stored at 25°C (Run No. 27) compared to the simple blend (Run No.26), revealing that the stabilization of the blend as result of the acid addition is sustainable on the long term.

**TABLE 5 Inventive examples of blocked mercaptosilane/ mercaptosilane/ MSA**

| Run No. | Amount (%wt.) in the blend | | | Kind of example s | Hydroalcoholic pH | Amount of H₂S-HS at 50 °C in ppm | | |
|---|---|---|---|---|---|---|---|---|
| | Blocked mercaptosilane^{a} (compound (a)) | Mercaptosilane^{b} (compound (b)) | MSA^{c} (compound (c)) | | As made 0 days at 25 °C | 0 days | 7 days | 30 days |
| 22 | 75 | 25 | 0 | comparative | 8,91 | 29,7 | 323,1 | 574,1 |
| 23 | 74,9441 | 24,9813 | 0,0746 | inventive | 6,14 | 18,8 | 17,3 | 24,8 |
| 24 | 74,9429 | 24,9810 | 0,0761 | inventive | 5,94 | 21,1 | 13,6 | 16,7 |
| 25 | 74,9422 | 24,9807 | 0,0771 | inventive | 5,58 | 21,2 | 11,7 | 17,9 |
| ^{a}3-octanoylthio-1-propyltriethoxysilane, as NXT* Silane from Momentive | | | | | | | | |
| ^{b}3-mercaptopropyltriethoxysilane, as SILQUEST* A-1891 Silane from Momentive | | | | | | | | |
| ^{c}methanesulfonic acid (MSA) from Sigma-Aldrich | | | | | | | | |

**TABLE 6 Stabilization of the organosilane disulfide content in blends added with MSA**

| Property | Unit | Run No. 22 | Run No. 22 | Run No. 24 | Run No.24 | Run No. 24 |
|---|---|---|---|---|---|---|
| | | from Table 5 | from Table 5 | from Table 5 | from Table 5 | from Table 5 |
| | | As made | 30 days at 50 °C | As made | 7 days at 50 °C | 30 days at 50 °C |
| | | 0 day at 25 °C | | 0 day at 50 °C | | |
| Mercaptosilane^{a} | % wt. | 24,80 | 24,68 | 24,75 | 24,73 | 24,68 |
| Organosilane disulfide^{b} | % wt. | 0,21 | 0,28 | 0,17 | 0,17 | 0,17 |
| ^{a}3-mercaptopropyltriethoxysilane, as SILQUEST* A-1891 Silane from Momentive | | | | | | |
| ^{b}bis-3-triethoxysilylpropyl disulfide formed in situ | | | | | | |

**TABLE 7 Long-term stabilization towards hydrogen sulfide emissions**

| Ru n No. | Amount (%wt.) in the blend | | | Kind of example s | Hydroalcoholic pH | Amount of H₂S-HS at 25 °C in ppm | | | |
|---|---|---|---|---|---|---|---|---|---|
| | Blocke d merca ptosilane^{a} (compound (a)) | Merca ptosilan e^{b} (compound (b)) | MS A^{c} (co mpo und (c)) | | As made 0 days at 25 °C | 0 days | 60 days | 120 days | 365 days |
| 26 | 75 | 25 | 0 | Comparative | 8,85 | 23,9 | 421,3 | 511,3 | 1550,4 |
| 27 | 74,94 11 | 24,98 04 | 0,0 785 | Inventtive | 5,45 | 19,5 | 4,3 | 4,5 | 11,6 |
| ^{a}3-octanoylthio-1-propyltriethoxysilane, as NXT* Silane from Momentive | | | | | | | | | |
| ^{b}3-mercaptopropyltriethoxysilane, as SILQUEST* A-1891 Silane from Momentive | | | | | | | | | |
| ^{c}methanesulfonic acid (MSA) from Sigma-Aldrich | | | | | | | | | |

### EXAMPLE 5 (comparative example): 3-Octanoylthio-1-propyltriethoxysilane (OTPTES) as compound (a) / mercaptopropyltriethoxysilane (MPTES) as compound (b) / acetic acid as comparative compound (c')

Blends of OTPTES and MPTES were dosed with acetic acid at different acid percentage levels by using a procedure like the one reported in the Example 1.

The addition of a weak acid with a strength as low as the one from acetic acid does not prevent the buildup of H₂S-HS over time as shown in Table 8.

**TABLE 8 Comparative examples of blocked mercaptosilane (a) / mercaptosilane (b) / acetic acid (pKa 4.89)**

| Run No. | Amount (%wt.) in the blend | | | kind of examples | Hydroalcoholic pH | Amount of H₂S-HS at 50 °C in ppm | | |
|---|---|---|---|---|---|---|---|---|
| | Blocked mercaptosilane^{a} (compound (a)) | Mercaptosilane^{b} (compound (b)) | Acetic acid^{c} (compo und (c)) | | As made 0 days at 25 °C | 0 days | 7 days | 30 days |
| 28 | 75 | 25 | 0 | comparative | 8,63 | 11,6 | 261,2 | 546,7 |
| 29 | 74,9 | 25 | 0,1 | comparative | 6,58 | 25 | 320,8 | 1127,3 |
| 30 | 74,8 | 25 | 0,2 | comparative | 6,2 | 37,7 | 453,2 | 745,2 |
| 31 | 74,7 | 25 | 0,3 | comparative | 5,74 | 25,4 | 353,5 | 543,6 |
| 32 | 74,6 | 25 | 0,4 | comparative | 5,66 | 25,9 | 399,3 | 508,5 |
| 33 | 74,5 | 25 | 0,5 | comparative | 5,46 | 21,7 | 436,7 | 721,1 |
| ^{a}3-octanoylthio-1-propyltriethoxysilane, as NXT* Silane from Momentive | | | | | | | | |
| ^{b}3-mercaptopropyltriethoxysilane, as SILQUEST* A-1891 Silane from Momentive | | | | | | | | |
| ^{c}Available from Sigma-Aldrich (pKa 4.89) | | | | | | | | |

### EXAMPLE 6: 3-Octanoylthio-1-propyltriethoxysilane as compound (a) / mercaptopropyltriethoxysilane as compound (b) / acids with different strengths as compound (c))

Blends of OTPTES and MPTES were dosed with acetic acid at different acid percentage levels by using a procedure similar to the one reported in the Example 1.

Acids with strength comprising pKa values lower than 4.89 were dosed to blends of OTPTES and MPTES to identify the minimum acidic strength able to reduce the formation of hydrogen sulfide on aging. Table 9 shows that acids with pka values lower than 3.75 effectively reduce the hydrogen sulfide formation at 7 days at 50°C (Runs from No. 35 to 41) compared to the simple blend without the acid (Run No. 34). Acids with pka values equal or higher than 3.75 (Runs from No. 42 to 45) result ineffective in mitigating the hydrogen sulfide formation on aging.

**TABLE 9 Inventive examples for acids with different strengths**

| **Run No.** | **Amount (%wt.) in the blend** | | | **Acid (c) description** | **Dissociation constant** | **Kind of examples** | **Hydroalcoholic pH** | **Amount of H₂S-HS at 50 °C in ppm** | |
|---|---|---|---|---|---|---|---|---|---|
| | **Blocked mercaptosilane^{a} (compound (a))** | **Mercaptosilane^{b} (compound (b))** | **Acid^{c}** | | **pKₐ** | | **As made** | **As made** | **7 days** |
| 37 | 75 | 25 | 0 | - | - | comparative | 8,85 | 21,0 | 329,4 |
| 38 | 74,9131 | 24,9711 | 0,1158 | Trifluoromethanesulfonic acid^{d} | -14,7^{e} | inventive | 3,65 | 8,7 | 68,8 |
| 39 | 74,9431 | 24,9811 | 0,0758 | Sulfuric acid^{f,g} | -2,8^{h} | inventive | 3,59 | 11,3 | 78,5 |
| 40 | 74,9411 | 24,9804 | 0,0785 | Methanesulfonic acid | -1,9^{h} | inventive | 5,45 | 19,5 | 12,5 |
| 41 | 74,9340 | 24,9780 | 0,0880 | Trifluoroacetic acid | 0,52ⁱ | inventive | 4,45 | 31,1 | 29,2 |
| 42 | 74,9255 | 24,9752 | 0,0993 | Dichloroacetic acid | 1,35ⁱ | inventive | 4,74 | 32,2 | 34,4 |
| 43 | 74,9452 | 24,9818 | 0,0730 | Chloroacetic acid | 2,87ⁱ | inventive | 5,03 | 34,2 | 36,7 |
| 44 | 74,8905 | 24,9635 | 0,1460 | Citric acid^{j} 10 %wt. in ethanol | 3,13ⁱ | inventive | 5,42 | 24,8 | 26,1 |
| 45 | 74,9734 | 24,9911 | 0,0355 | Formic acid | 3,75ⁱ | comparative | 6,15 | 31,5 | 378,8 |
| 46 | 74,9288 | 24,9777 | 0,0935 | Benzoic acid 10 %wt. in ethanol | 4,20ⁱ | comparative | 7,14 | 31,2 | 408,4 |
| 47 | 74,9659 | 24,9887 | 0,0454 | Acetic acid | 4,76ⁱ | comparative | 7,25 | 31,3 | 378,4 |
| 48 | 74,9164 | 24,9721 | 0,1115 | Octanoic acid | 4,89ⁱ | comparative | 7,48 | 32,3 | 387,7 |
| ^{a}3-octanoylthio-1-propyltriethoxysilane, as NXT* Silane from Momentive | | | | | | | | | |
| ^{b}3-mercaptopropyltriethoxysilane, as SILQUEST* A-1891 Silane from Momentive | | | | | | | | | |
| ^{c}Available from Sigma-Aldrich | | | | | | | | | |
| ^{d}Hammett acidity function (*H*₀) for the concentrated acid is -14,1 from G. A. Olah, G. K. S. Prakash, J. Sommer, A. Molnar. Superacid Chemistry. 2009 (2nd ed.) | | | | | | | | | |
| ^{e}Data available from A. Trummal, L. Lipping, I. Kaljurand, I. A. Koppel, I. Leito. Journal of Physical Chemistry A 2016, 120, 20, 3663-3669 | | | | | | | | | |
| ^{f}Hammett acidity function (*H*₀) for the concentrated acid is -12,0 from G. A. Olah, G. K. S. Prakash, J. Sommer, A. Molnar. Superacid Chemistry. 2009 (2nd ed.) | | | | | | | | | |
| ^{g}Diprotic acid: pkₐ₂ is 1,99 available from CRC Handbook of Chemistry and Physics 95th Edition | | | | | | | | | |
| ^{h}Data available from J. P. Guthrie. Canadian Journal of Chemistry 1978, 56, 17, 2342-2354 | | | | | | | | | |
| ⁱData apply to dilute aqueous solution of the acid and is available from CRC Handbook of Chemistry and Physics 95^{th} Edition | | | | | | | | | |
| ^{j}Triprotic acid: pkₐ₂ is 4,76 and pkₐ₃ is 6,40 available from CRC Handbook of Chemistry and Physics 95th Edition | | | | | | | | | |

### EXAMPLES 7 AND 8

Blends of OTPTES and MPTES, as well as blends of TESPD and MPTES were dosed with the additive components as indicated in tables 10 and 11.

Tables 10 and 11 show that also the use of compounds forming HCl in situ as component (c) (Runs No. 51, 52, 53, 54 and 56 in Table 10) or methanesulfonic acid in situ as component (c) (Run No. 55 in Table 10) and the use of Lewis acids (Runs No. 58 and 59 in Table 11) are capable to reducing the formation of hydrogen sulfide on aging.

**TABLE 10 - EXAMPLE - IN-SITU FORMATION OF THE COMPONENT (c)**

| **Run No.** | **Amount (%wt.) in the blend** | | | | **In situ-Additive description** | **Kind of example** | **Amount at 50 °C in** | **of H₂S-HS ppm** |
|---|---|---|---|---|---|---|---|---|
| | **Blocked mercaptosilane^{a} (compound (a))** | **Organosilane polysulfide^{b} (compound (a)** | **Mercaptosilane^{c} (compound (b)** | **Amount Additive^{d}** | | | **As made** | **7 days** |
| 49 | 75 | 0 | 25 | 0 | - | comparative | 32,1 | 366,1 |
| 50 | 0 | 75 | 25 | 0 | - | comparative | >10000 | >10000 |
| 51 | 74,9081 | 0 | 24,9694 | 0,1225 | Dichlorophenylborane | inventive | 30,1 | 19,4 |
| 52 | 74,9372 | 0 | 24,9791 | 0,0837 | Chlorotrimethylsilane | inventive | 30,1 | 22,9 |
| 53 | 74,8118 | 0 | 24,9372 | 0,2510 | Octanoyl chloride | inventive | 8,5 | 9,7 |
| 54 | 74,9339 | 0 | 24,9780 | 0,0881 | Methanesulfonyl chloride | inventive | 25,7 | 22,1 |
| 55 | 74,8993 | 0 | 24,9665 | 0,1342 | Methanesulfonic anhydride | inventive | 40,5 | 26,1 |
| 56 | 0 | 74,6844 | 24,8948 | 0,4208 | Chlorotrimethylsilane | inventive | 44,4 | 37,3 |
| ^{a}3-octanoylthio-1-propyltriethoxysilane, as NXT* Silane from Momentive | | | | | | | | |
| ^{b}bis-3-triethoxysilylpropyl disulfide, as SCA-985 from Struktol | | | | | | | | |
| ^{c}3-mercaptopropyltriethoxysilane, as SILQUEST* A-1891 Silane from Momentive | | | | | | | | |
| ^{d}Available from Sigma-Aldrich | | | | | | | | |

**Table 11 - EXAMPLE - USE OF A LEWIS ACID AS THE COMPONENT (c2)**

| **Run No.** | **Amount (%wt.) in the blend** | | | **Additive (c2) description** | **Kind of example** | **Amount of H₂S-HS at 50 °C in ppm** | |
|---|---|---|---|---|---|---|---|
| | **Blocked mercaptosilane^{a} (compound (a))** | **Mercaptosilane^{b} (compound (b))** | **Amount Additive^{c}** | | | **As made** | **7 days** |
| 57 | 75 | 25 | 0 | - | comparative | 30,3 | 385,2 |
| 58 | 74,9535 | 24,9845 | 0,0620 | Triethyl borate | inventive | 23,8 | 125,2 |
| 59 | 74,9547 | 24,9849 | 0,0604 | Tetra-n-butyl orthotitanate | inventive | 11,2 | 10,3 |
| 60 | 74,8800 | 24,9600 | 0,1600 | Aluminium-tri-sec-butylate | inventive | 17,8 | 12,8 |
| ^{a}3-octanoylthio-1-propyltriethoxysilane, as NXT* Silane from Momentive | | | | | | | |
| ^{b}3-mercaptopropyltriethoxysilane, as SILQUEST* A-1891 Silane from Momentive | | | | | | | |
| ^{c}Available from Sigma-Aldrich | | | | | | | |

### EXAMPLE 9

Blends of OTPTES, MPTES, and methane sulfonic acid (MSA) were prepared by using a procedure similar to the one reported in the Example 1.

Both freshly prepared and aged samples were submitted to GC-HS and GC analyses.

Table 12 shows that the amount of H₂S-HS of the acidified silane blend is also dramatically lower upon aging at a temperature higher than 50 °C, in particular at a temperature of 130 °C for 7 days (see Run No. 62) when compared to the simple blend (Run No. 61). In addition, Table 13 shows that the composition of the acidified silane blend (see Run No. 62) is acceptably stable even upon aging at 130 °C for 7 days while the composition of the simple blend in the same conditions is altered and TESPD is dramatically increased (Run No. 61).

**TABLE 12 Stabilization towards hydrogen sulfide emissions at temperature higher than 50 °C**

| Run No. | Amount (%wt.) in the blend | | | Kind of examples | Hydroalcoholic pH | Amount of H₂S-HS at 130 °C in ppm | |
|---|---|---|---|---|---|---|---|
| | Blocked mercaptosilane^{a} (compound (a)) | Mercaptosilane^{b} (compound (b)) | MSA^{c} (compound (c)) | | As made | 0 days | 7 days |
| | | | | | 0 days at 25 °C | | |
| 61 | 75 | 25 | 0 | comparative | 8,92 | 22,9 | 878,4 |
| 62 | 74,9411 | 24,9804 | 0,0785 | inventive | 5,48 | 19,5 | 102,1 |
| ^{a}3-octanoylthio-1-propyltriethoxysilane, as NXT* Silane from Momentive | | | | | | | |
| ^{b}3-mercaptopropyltriethoxysilane, as SILQUEST* A-1891 Silane from Momentive | | | | | | | |
| ^{c}methanesulfonic acid (MSA) from Sigma-Aldrich | | | | | | | |

**TABLE 13 Stabilization of the organosilane disulfide content in blends added with MSA and aged at temperature higher than 50 °C**

| Property | Unit | Run No. 61 | Run No. 61 | Run No. 62 | Run No. 62 |
|---|---|---|---|---|---|
| | | from Table 12 | from Table 12 | from Table 12 | from Table 12 |
| | | As made | 7 days at 130 °C | As made | 7 days at 130 °C |
| | | 0 day at 25 °C | | 0 day at 25 °C | |
| Mercaptosilane^{a} | % wt. | 24,9 | 23,73 | 24,85 | 24,46 |
| Organosilane disulfide^{b} | % wt. | 0,21 | 0,65 | 0,17 | 0,18 |
| ^{a}3-mercaptopropyltriethoxysilane, as SILQUEST* A-1891 Silane from Momentive | | | | | |
| ^{b}bis-3-triethoxysilylpropyl disulfide formed in situ | | | | | |

## Claims

1. A composition comprising:
(a) one or more sulfur-containing silanes, which do not have a free mercapto (HS-) functionality,
(b) one or more organic compounds with free mercapto (HS-) functionality,
(c) at least one acid selected from acids having a pKa, determined in aqueous solution at a temperature of 25°C of less than 3.75, and one or more Lewis acids.

2. A composition according to any of the previous claims, wherein
the sulfur-containing silanes, which do not have a mercapto (HS-) functionality (a), are selected from the group consisting of blocked mercaptosilanes, organosilane polysulfides, and mixtures thereof.

3. A composition according to any of the previous claims, wherein
the organic compounds with mercapto (HS-) functionality (b), are selected from the group consisting of mercaptosilanes and organic mercapto compounds, which do not comprise silane moieties, such as alkyl mercaptans like n-octyl mercaptan or tert-dodecanethiol, mercaptoacids and their esters such as those of the formula HS(CH)ₙCOOH wherein n is from 1 to 5, including thioglycolic acid, 3-mercaptopropionic acid, methyl 3-mercaptopropionate, pentaerythritol tetrakis(3-mercaptopropionate), trimethylolpropane tris(3-mercaptopropionate), hydroxy alkyl mercapto compounds such as thioglycerol, 1,3-dimercapto-2-propanol, or aromatic and heteroaromatic mercapto compounds such as mercapto-2-benzothiazole.

4. A composition according to any of the previous claims, wherein
the acid with a pKa, determined in aqueous solution at a temperature of 25°C, of less than 3.75 acid (c), is selected from the group consisting of protic acids, such as inorganic acids, organic acids and mixtures thereof or, wherein the acid with a pKa, determined in aqueous solution at a temperature of 25°C, of less than 3.75 acid (c), is formed in situ through the addition of hydrolysable compound, which forms said acid upon reaction with residual water present in components of the composition.

5. A composition according to any of the previous claims, wherein
the acid (c) is a Lewis acid (c2) preferably selected from group consisting of compounds of lithium (Li) and alkali metals, beryllium (Be), magnesium (Mg) and alkaline earth metals, boron (B), aluminum (Al), silicon (Si), tin (Sn), elements of the d block of the periodic table, such as scandium (Sc), titanium (Ti), vanadium (V), manganese (Mn), chromium (Cr) , Iron (Fe), cobalt (Co), and zinc (Zn), lanthanum (La) and lanthanide and combinations thereof, preferably the Lewis acid (c2) is an organic boron or titanium compound.

6. A composition according to any of the previous claims, wherein
the sulfur-containing silanes, which do not have a mercapto (HS-) functionality (a), are selected from the group consisting of blocked mercapto silanes of the formula (I): 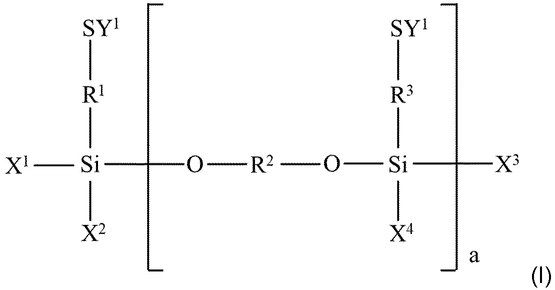
wherein
R¹ is independently a linear alkylene group of from 1 to 6 carbon atoms or a branched alkylene group of from 3 to 6 carbon atoms;
each occurrence of R² is a linear alkylene group of from 2 to 8 carbon atoms or a branched alkylene group of from 3 to 8 carbon atoms;
each occurrence of R³ is independently a linear alkylene group of from 1 to 6 carbon atoms or a branched alkylene group of from 3 to 6 carbon atoms;
X¹ is a -OR⁴ group, where R⁴ is an alkyl group of from 1 to 4 carbon atoms, a -OR⁵OH group, where R⁵ is a linear alkylene group of from 2 to 8 carbon atoms or a branched alkylene group of from 3 to 8 carbon atom, or X¹ is a -OR⁶(OR⁷)_{C}OR⁸, where R⁶ is a straight chain alkylene group of from 2 to 6 carbon atoms or a branched chain alkylene group of from 3 to 6 carbon atoms, preferably 3 carbon atoms, each R⁷ is independently an alkylene group of from 2 to 4 carbon atoms and R⁸ is a straight chain alkyl group of from 1 to 16 carbon atoms or a branched chain alkyl group of from 3 to 16 carbon atoms and c is an integer from 1 to 20;
X² and X³ are independently X¹ or methyl;
each occurrence of X⁴ is independently X¹ or methyl;
each occurrence of Y¹ is -C(=O)R⁹, -C(=S)OR⁹ or -CN, wherein each R⁹ is independently a straight chain alkylene group of from 1 to 16 carbon atoms, more preferably from 5 to 11 carbon atoms and even more preferably from 6 to 9 carbon atom, or a branched chain alkylene group of from 3 to 16 carbon atoms, more preferably from 5 to 11 carbon atoms and even more preferably 6 to 9 carbon atoms; and
a is an integer of from 0 to 8, with the proviso that
(iii) when X¹ and X² are -OR⁴, then the two -OR⁴ may be bonded together through a covalent bond to form a -OR⁴-R⁴O- group bonded to the same silicon atom which forms a ring structure containing 2 to 8 carbon atoms, two oxygen atoms and a silicon atom; and
(iv) when a is 1 to 8 and X³ and X⁴ are -OR⁴, then the two -OR⁴ groups may be bonded together through a covalent bond to form a -OR⁴-R⁴O- group, which is bonded to the same silicon atom to form a ring structure containing 2 to 8 carbon atoms, two oxygen atoms and a silicon atom.

7. A composition according to any of the previous claims, wherein
the sulfur-containing silanes (a), which do not have a mercapto (HS-) functionality component, are selected from silanes, comprising at least one polysulfide moiety -Sₓ-, wherein x is an average value from about 2 to about 12, preferably about 2 to about 10, more preferably about 2 to about 8, more preferably about 2 to about 6, more preferably about 2 to about 4, more preferably is about 2 or about 4.

8. A composition according to any of the previous claims, wherein the sulfur-containing silanes (a) form more than 50 wt-% relative to the entire composition.

9. A composition according to any of the previous claims, wherein
the organic compounds with mercapto (HS-) functionality (b), are selected from mercaptosilanes of the formula 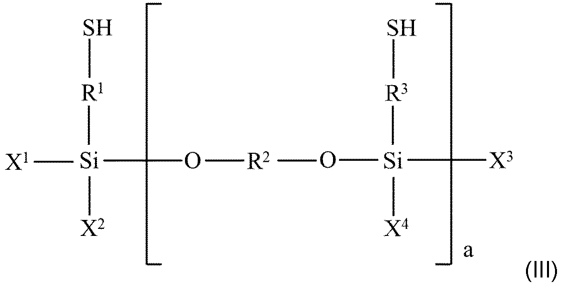
wherein
R¹ is independently from each other as defined previously;
each occurrence of R² is independently as defined previously;
each occurrence of R³ is independently is independently as defined previously; X¹, X², X³ and X⁴ are independently of each other as defined previously, and
a is as defined previously.

10. A composition according to any of the previous claims, wherein
the hydroalcoholic pH of a solution at 25°C is below about 7, preferably between about 3 and about 7, more preferably between about 4 and about 6, and even more preferably between about 5 and about 6.

11. A composition according to any of the previous claims, comprising
about 5 to about 95 wt.-%, preferably about 50 to about 95 wt.-% of the one or more sulfur-containing silanes (a),
about 5 to about 95 wt.-% wt.-%, preferably about 5 to about 50 wt.-% of the one or more organic compounds (b), and
about 0.01 to about 5 wt.-%, preferably about 0.01 to about 2 wt.-%, more preferably about 0.01 to about 1 wt.-%, still more preferably about 0.01 to about 0.1 wt.-%, of at least one acid (c),
the percentages each being based on the total amount of the composition.

12. A method for the manufacture of the composition according to any of the previous claims, comprising at least one step of combining or contacting components (a), (b) and/or (c), preferably comprising the steps of
(i) combining one or more sulfur-containing silanes (a), with at least one acid (c) and then with one or more organic compounds (b), or
(ii) combining one or more organic compounds (b) with at least one acid (c) and then with one or more sulfur-containing silanes (a), or
wherein at least one acid (c) is added in the manufacture of the sulfur-containing silanes (a), or in the manufacture of the organic compounds (b) by means of a unit operation comprising raw material treatment, mixing, reaction steps, washing steps, purification steps, filtration steps, heat treatments and post-production treatments.

13. A method for reducing the hydrogen sulfide emissions of sulfur-containing silane compositions comprising the step of adding to said compositions an effective amount of least one acid selected from acids having a pKa, determined in aqueous solution at a temperature of 25°C of less than 3.75, and Lewis acids (c2).

14. Use of the composition according to any of the previous claims as an additive for rubber compositions, comprising filler such as carbon black or silica, preferably silica.

15. Rubber compositions, comprising silica and one or more compositions according to any of the previous claims, and vulcanized articles thereof.

## Patentansprüche

1. Eine Zusammensetzung, umfassend:
(a) ein oder mehrere schwefelhaltige Silane, die keine freie Mercapto-(HS-)Funktionalität aufweisen,
(b) eine oder mehrere organische Verbindungen mit freier Mercapto-(HS-)Funktionalität,
(c) mindestens eine Säure, ausgewählt aus Säuren mit einem pKa-Wert, bestimmt in wässriger Lösung bei einer Temperatur von 25°C, von weniger als 3,75 und einer oder mehreren Lewis-Säuren.

2. Eine Zusammensetzung gemäß einem der vorhergehenden Ansprüche, wobei die schwefelhaltigen Silane, die keine Mercapto-(HS-)Funktionalität aufweisen (a), aus der Gruppe ausgewählt sind, die aus geblockten Mercaptosilanen, Organosilanpolysulfiden und Mischungen davon besteht.

3. Eine Zusammensetzung gemäß einem der vorhergehenden Ansprüche, wobei die organischen Verbindungen mit Mercapto-(HS-)Funktionalität (b) aus der Gruppe ausgewählt sind, die aus Mercaptosilanen und organischen Mercapto-Verbindungen, die keine Silan-Einheiten umfassen, wie etwa Alkylmercaptanen wie n-Octylmercaptan oder tert-Dodecanthiol, Mercaptosäuren und deren Estern, wie etwa solchen der Formel HS(CH₎ₙCOOH, worin n von 1 bis 5 ist, besteht, einschließlich Thioglycolsäure, 3-Mercaptopropionsäure, 3-Mercaptopropionsäuremethylester, Pentaerythritoltetrakis(3-Mercaptopropionat), Trimethylolpropantris(3-Mercaptopropionat), Hydroxyalkylmercaptoverbindungen wie Thioglycerin, 1,3-Dimercapto-2-propanol, oder aromatische und heteroaromatische Mercaptoverbindungen wie Mercapto-2-benzothiazol.

4. Eine Zusammensetzung gemäß einem der vorhergehenden Ansprüche, wobei die Säure mit einem pKa, bestimmt in wässriger Lösung bei einer Temperatur von 25°C, von weniger als 3,75 Säure (c), aus der Gruppe ausgewählt ist, die aus protischen Säuren, wie anorganischen Säuren, organischen Säuren und Mischungen davon, besteht, oder wobei die Säure mit einem pKa, bestimmt in wässriger Lösung bei einer Temperatur von 25°C, von weniger als 3,75 Säure (c), in situ durch die Zugabe einer hydrolysierbaren Verbindung gebildet wird, die die Säure bei der Reaktion mit restlichem Wasser, das in Komponenten der Zusammensetzung vorhanden ist, bildet.

5. Eine Zusammensetzung gemäß einem der vorhergehenden Ansprüche, wobei die Säure (c) eine Lewis-Säure (c2) ist, bevorzugt ausgewählt aus der Gruppe, die aus Verbindungen von Lithium (Li) und Alkalimetallen, Beryllium (Be), Magnesium (Mg) und Erdalkalimetallen, Bor (B), Aluminium (Al), Silicium (Si), Zinn (Sn), Elementen des *d-Blocks* des Periodensystems, wie etwa Scandium (Sc), Titan (Ti), Vanadium (V), Mangan (Mn), Chrom (Cr), Eisen (Fe), Kobalt (Co) und Zink (Zn), Lanthan (La) und Lanthaniden sowie deren Kombinationen besteht, wobei die Lewis-Säure (c2) bevorzugt eine organische Bor- oder Titanverbindung ist.

6. Eine Zusammensetzung gemäß einem der vorhergehenden Ansprüche, wobei die schwefelhaltigen Silane, die keine Mercapto-(HS-)Funktionalität (a) aufweisen, aus der Gruppe ausgewählt sind, die aus geblockten Mercaptosilanen der Formel (I) besteht: 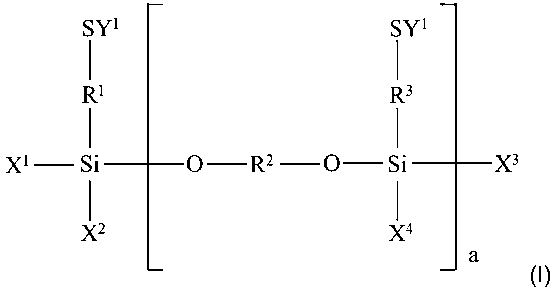 wobei
R¹ in unabhängiger Weise eine lineare Alkylengruppe mit 1 bis 6 Kohlenstoffatomen oder eine verzweigte Alkylengruppe mit 3 bis 6 Kohlenstoffatomen ist;
jedes Auftreten von R² eine lineare Alkylengruppe mit 2 bis 8 Kohlenstoffatomen oder eine verzweigte Alkylengruppe mit 3 bis 8 Kohlenstoffatomen ist;
jedes Auftreten von R³ in unabhängiger Weise eine lineare Alkylengruppe mit 1 bis 6 Kohlenstoffatomen oder eine verzweigte Alkylengruppe mit 3 bis 6 Kohlenstoffatomen ist;
X¹ eine -OR⁴-Gruppe ist, wobei R⁴ eine Alkylgruppe mit 1 bis 4 Kohlenstoffatomen ist, eine OR⁵OH-Gruppe, wobei R⁵ eine lineare Alkylengruppe mit 2 bis 8 Kohlenstoffatomen oder eine verzweigte Alkylengruppe mit 3 bis 8 Kohlenstoffatomen ist, oder X¹ eine -OR⁶(OR⁷)_{c}OR⁸ ist, wobei R⁶ eine geradkettige Alkylengruppe mit 2 bis 6 Kohlenstoffatomen oder eine verzweigtkettige Alkylengruppe mit 3 bis 6 Kohlenstoffatomen, bevorzugt 3 Kohlenstoffatomen, ist, jedes R⁷ in unabhängiger Weise eine Alkylengruppe mit 2 bis 4 Kohlenstoffatomen ist und R⁸ eine geradkettige Alkylgruppe mit 1 bis 16 Kohlenstoffatomen oder eine verzweigtkettige Alkylgruppe mit 3 bis 16 Kohlenstoffatomen ist und c eine ganze Zahl von 1 bis 20 ist;
X² und X³ in unabhängiger Weise für X¹ oder Methyl stehen;
jedes Auftreten von X⁴ in unabhängiger Weise für X¹ oder Methyl steht;
jedes Auftreten von Y¹ -C(=O)R⁹, -C(=S)OR⁹ oder -CN ist, wobei jedes R⁹ in unabhängiger Weise eine geradkettige Alkylengruppe mit 1 bis 16 Kohlenstoffatomen, bevorzugter mit 5 bis 11 Kohlenstoffatomen und noch bevorzugter mit 6 bis 9 Kohlenstoffatomen, oder eine verzweigtkettige Alkylengruppe mit 3 bis 16 Kohlenstoffatomen, bevorzugter mit 5 bis 11 Kohlenstoffatomen und noch bevorzugter mit 6 bis 9 Kohlenstoffatomen ist; und
a eine ganze Zahl von 0 bis 8 ist, mit der Maßgabe, dass
(iii) wenn X¹ und X² -OR⁴ sind, dann können die beiden -OR⁴ durch eine kovalente Bindung miteinander verbunden sein, um eine -OR⁴-R⁴O-Gruppe zu bilden, die an dasselbe Siliciumatom gebunden ist und eine Ringstruktur bildet, die 2 bis 8 Kohlenstoffatome, zwei Sauerstoffatome und ein Siliciumatom enthält; und
(iv) wenn a 1 bis 8 ist und X³ und X⁴ -OR⁴ sind, dann können die beiden -OR⁴-Gruppen durch eine kovalente Bindung miteinander verbunden werden, um eine -OR⁴-R⁴O-Gruppe zu bilden, die an dasselbe Siliciumatom gebunden ist, um eine Ringstruktur zu bilden, die 2 bis 8 Kohlenstoffatome, zwei Sauerstoffatome und ein Siliciumatom enthält.

7. Eine Zusammensetzung gemäß einem der vorhergehenden Ansprüche, wobei die schwefelhaltigen Silane (a), die keine Mercapto-(HS-)Funktionalitätskomponente aufweisen, aus Silanen ausgewählt sind, die mindestens eine Polysulfideinheit -Sₓ- umfassen, wobei x ein Durchschnittswert von etwa 2 bis etwa 12, bevorzugt etwa 2 bis etwa 10, bevorzugter etwa 2 bis etwa 8, noch bevorzugter etwa 2 bis etwa 6, noch bevorzugter etwa 2 bis etwa 4 ist, noch bevorzugter etwa 2 oder etwa 4 ist.

8. Eine Zusammensetzung gemäß einem der vorhergehenden Ansprüche, wobei die schwefelhaltigen Silane (a) mehr als 50 Gew.-%, bezogen auf die gesamte Zusammensetzung, darstellen.

9. Eine Zusammensetzung gemäß einem der vorhergehenden Ansprüche, wobei die organischen Verbindungen mit Mercapto-(HS-)Funktionalität (b) aus Mercaptosilanen der Formel 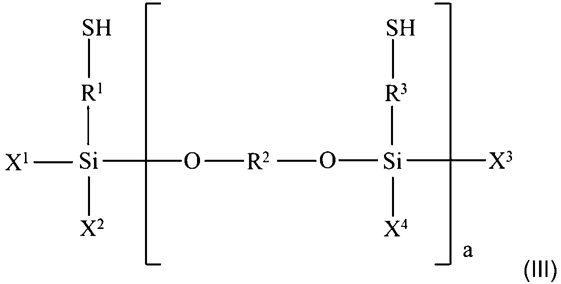
ausgewählt sind,
wobei
R¹ in unabhängiger Weise wie zuvor definiert ist;
jedes Vorkommen von R² in unabhängiger Weise wie zuvor definiert ist;
jedes Vorkommen von R³ in unabhängiger Weise wie zuvor definiert ist;
X¹, X², X³ und X⁴ unabhängig voneinander wie zuvor definiert sind,
und
a wie zuvor definiert ist.

10. Eine Zusammensetzung gemäß einem der vorhergehenden Ansprüche, wobei der hydroalkoholische pH-Wert einer Lösung bei 25 °C unter etwa 7 liegt, bevorzugt zwischen etwa 3 und etwa 7, bevorzugter zwischen etwa 4 und etwa 6, und noch bevorzugter zwischen etwa 5 und etwa 6.

11. Eine Zusammensetzung gemäß einem der vorhergehenden Ansprüche, die etwa 5 bis etwa 95 Gew.-%, bevorzugt etwa 50 bis etwa 95 Gew.-% des einen oder der mehreren schwefelhaltigen Silane (a),
etwa 5 bis etwa 95 Gew.-%, bevorzugt etwa 5 bis etwa 50 Gew.-% der einen oder der mehreren organischen Verbindungen (b), und
etwa 0,01 bis etwa 5 Gew.-%, bevorzugt etwa 0,01 bis etwa 2 Gew.-%, bevorzugter etwa 0,01 bis etwa 1 Gew.-%, noch bevorzugter etwa 0,01 bis etwa 0,1 Gew.-% mindestens einer Säure (c) umfasst,
wobei die Prozentsätze jeweils auf die Gesamtmenge der Zusammensetzung bezogen sind.

12. Ein Verfahren zur Herstellung der Zusammensetzung gemäß einem der vorhergehenden Ansprüche, umfassend mindestens einen Schritt des Kombinierens oder Inkontaktbringens der Komponenten (a), (b) und/oder (c), bevorzugt umfassend die Schritte des
(i) Kombinierens eines oder mehrerer schwefelhaltiger Silane (a) mit mindestens einer Säure (c) und dann mit einer oder mehreren organischen Verbindungen (b) oder
(ii) des Kombinierens einer oder mehrerer organischer Verbindungen (b) mit mindestens einer Säure (c) und anschließend mit einem oder mehreren schwefelhaltigen Silanen (a), oder
wobei mindestens eine Säure (c) bei der Herstellung der schwefelhaltigen Silane (a) oder bei der Herstellung der organischen Verbindungen (b) mittels eines Verfahrensschrittes zugegeben wird, der Rohstoffbehandlung, Mischen, Reaktionsschritte, Waschschritte, Reinigungsschritte, Filtrationsschritte, Wärmebehandlungen und Nachbehandlungen umfasst.

13. Ein Verfahren zur Verringerung der Schwefelwasserstoffemissionen von schwefelhaltigen Silanzusammensetzungen, umfassend den Schritt des Hinzufügens einer wirksamen Menge mindestens einer Säure, die aus Säuren mit einem pKa-Wert, bestimmt in wässriger Lösung bei einer Temperatur von 25 °C, von weniger als 3,75 und Lewis-Säuren (c2) ausgewählt ist, zu den besagten Zusammensetzungen.

14. Verwendung der Zusammensetzung gemäß einem der vorhergehenden Ansprüche als Additiv für Kautschukzusammensetzungen, die Füllstoffe wie Ruß oder Siliciumdioxid, bevorzugt Siliciumdioxid, enthalten.

15. Kautschukzusammensetzungen, die Siliciumdioxid und eine oder mehrere Zusammensetzungen gemäß einem der vorhergehenden Ansprüche enthalten, und vulkanisierte Erzeugnisse daraus.

## Revendications

1. Une composition comprenant :
(a) un ou plusieurs silanes contenant du soufre, qui n'ont pas de fonctionnalité mercapto (HS-) libre,
(b) un ou plusieurs composés organiques ayant une fonctionnalité mercapto (HS-) libre,
(c) au moins un acide choisi parmi les acides ayant un pKa, déterminé en solution aqueuse à une température de 25°C, inférieur à 3,75, et un ou plusieurs acides de Lewis.

2. Une composition selon l'une des revendications précédentes, dans laquelle les silanes contenant du soufre, qui n'ont pas de fonctionnalité mercapto (HS-) (a), sont choisis dans le groupe constitué par les mercaptosilanes bloqués, les polysulfures d'organosilanes et leurs mélanges.

3. Une composition selon l'une des revendications précédentes, dans laquelle les composés organiques ayant une fonctionnalité mercapto (HS-) (b) sont choisis dans le groupe constitué par les mercaptosilanes et les composés mercapto organiques qui ne comprennent pas de motifs silane, tels que les mercaptans alkyles comme le n-octyl mercaptan ou le tert-dodécanethiol, les mercaptoacides et leurs esters tels que ceux de la formule HS(CH)ₙCOOH où n est de 1 à 5, y compris l'acide thioglycolique, l'acide 3-mercaptopropionique, le 3-mercaptopropionate de méthyle, le tétrakis(3-mercaptopropionate) de pentaérythritol, le tris(3-mercaptopropionate) de triméthylolpropane, les composés mercapto hydroxyalkylés tels que le thioglycérol, le 1,3-dimercapto-2-propanol, ou les composés mercapto aromatiques et hétéroaromatiques tels que le mercapto-2-benzothiazole.

4. Une composition selon l'une des revendications précédentes, dans laquelle l'acide ayant un pKa, déterminé en solution aqueuse à une température de 25°C, inférieur à 3,75 acide (c), est choisi dans le groupe constitué par les acides protiques, tels que les acides inorganiques, les acides organiques et leurs mélanges ou, dans lequel l'acide ayant un pKa, déterminé en solution aqueuse à une température de 25°C, inférieur à 3,75 acide (c), est formé in situ par l'addition d'un composé hydrolysable, qui forme ledit acide par réaction avec l'eau résiduelle présente dans les composants de la composition.

5. Une composition selon l'une quelconque des revendications précédentes, dans laquelle
l'acide (c) est un acide de Lewis (c2) choisi préférablement dans le groupe constitué des composés du lithium (Li) et des métaux alcalins, du béryllium (Be), du magnésium (Mg) et des métaux alcalino-terreux, du bore (B), de l'aluminium (Al), du silicium (Si), de l'étain (Sn), des éléments du bloc d du tableau périodique, tels que le scandium (Sc), le titane (Ti), le vanadium (V), le manganèse (Mn), le chrome (Cr), le fer (Fe), le cobalt (Co) et le zinc (Zn), le lanthane (La) et les lanthanides et les combinaisons de ceux-ci, de préférence l'acide de Lewis (c2) est un composé organique de bore ou de titane.

6. Une composition selon l'une des revendications précédentes, dans laquelle les silanes contenant du soufre, qui n'ont pas de fonctionnalité mercapto (HS-) (a), sont choisis dans le groupe constitué par les mercapto-silanes bloqués de formule (I) : 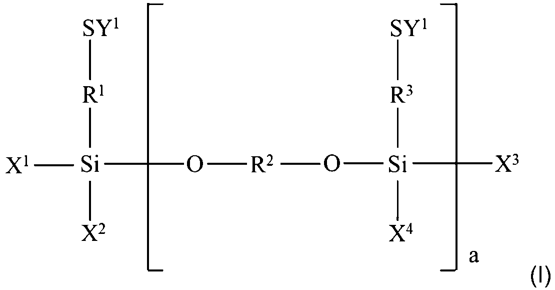 dans laquelle
R¹ est indépendamment un groupe alkylène linéaire de 1 à 6 atomes de carbone ou un groupe alkylène ramifié de 3 à 6 atomes de carbone ;
chaque occurrence de R² est un groupe alkylène linéaire de 2 à 8 atomes de carbone ou un groupe alkylène ramifié de 3 à 8 atomes de carbone ;
chaque occurrence de R³ est indépendamment un groupe alkylène linéaire de 1 à 6 atomes de carbone ou un groupe alkylène ramifié de 3 à 6 atomes de carbone ;
X1 est un groupe -OR⁴, où R⁴ est un groupe alkyle de 1 à 4 atomes de carbone, un groupe OR⁵OH, où R⁵ est un groupe alkylène linéaire de 2 à 8 atomes de carbone ou un groupe alkylène ramifié de 3 à 8 atomes de carbone, ou X¹ est un groupe -OR⁶(OR⁷)_{c}OR⁸, où R6 est un groupe alkylène à chaîne linéaire de 2 à 6 atomes de carbone ou un groupe alkylène à chaîne ramifiée de 3 à 6 atomes de carbone, préférablement 3 atomes de carbone, chaque R⁷ est indépendamment un groupe alkylène de 2 à 4 atomes de carbone et R⁸ est un groupe alkyle à chaîne linéaire de 1 à 16 atomes de carbone ou un groupe alkyle à chaîne ramifiée de 3 à 16 atomes de carbone et c est un nombre entier de 1 à 20 ;
X² et X³ sont indépendamment X¹ ou méthyle ;
chaque occurrence de X⁴ est indépendamment X¹ ou méthyle ;
chaque occurrence de Y¹ est -C(=O)R⁹, -C(=S)OR⁹ ou -CN, où chaque R⁹ est indépendamment un groupe alkylène à chaîne linéaire de 1 à 16 atomes de carbone, plus préférablement de 5 à 11 atomes de carbone et encore plus préférablement de 6 à 9 atomes de carbone, ou un groupe alkylène à chaîne ramifiée de 3 à 16 atomes de carbone, plus préférablement de 5 à 11 atomes de carbone et encore plus préférablement de 6 à 9 atomes de carbone ; et
a est un nombre entier de 0 à 8, à condition que
(iii) lorsque X¹ et X² sont des -OR⁴, les deux -OR⁴ peuvent être liés par une liaison covalente pour former un groupe -OR⁴-R⁴O- lié au même atome de silicium qui forme une structure en anneau contenant de 2 à 8 atomes de carbone, deux atomes d'oxygène et un atome de silicium ; et
(iv) lorsque a est compris entre 1 et 8 et que X³ et X⁴ sont des -OR⁴, les deux groupes -OR⁴ peuvent être reliés par une liaison covalente pour former un groupe -OR⁴-R⁴O-, qui est relié au même atome de silicium pour former une structure annulaire contenant de 2 à 8 atomes de carbone, deux atomes d'oxygène et un atome de silicium.

7. Une composition selon l'une des revendications précédentes, dans laquelle les silanes contenant du soufre (a), qui n'ont pas de composant de fonctionnalité mercapto (HS-), sont choisis parmi les silanes comprenant au moins un groupement polysulfure -Sₓ-, où x est une valeur moyenne d'environ 2 à environ 12, préférablement d'environ 2 à environ 10, plus préférablement d'environ 2 à environ 8, plus préférablement d'environ 2 à environ 6, plus préférablement d'environ 2 à environ 4, plus préférablement est d'environ 2 ou d'environ 4.

8. Une composition selon l'une des revendications précédentes, dans laquelle les silanes contenant du soufre (a) représentent plus de 50 % en poids par rapport à la composition entière.

9. Une composition selon l'une des revendications précédentes, dans laquelle les composés organiques ayant une fonctionnalité mercapto (HS-) (b), sont choisis parmi les mercaptosilanes de la formule suivante 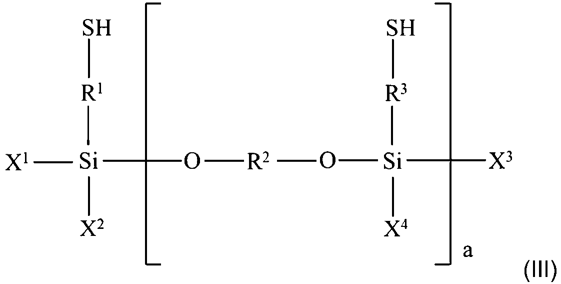 dans laquelle
R¹ est indépendamment l'un de l'autre tel que défini précédemment ;
chaque occurrence de R² est indépendamment telle que définie précédemment ;
chaque occurrence de R³ est indépendamment telle que définie précédemment ;
X¹, X², X³ et X⁴ sont indépendamment les uns des autres tels que définis précédemment, et
a est tel que défini précédemment.

10. Une composition selon l'une des revendications précédentes, dans laquelle le pH hydroalcoolique d'une solution à 25°C est inférieur à environ 7, préférablement entre environ 3 et environ 7, plus préférablement entre environ 4 et environ 6, et encore plus préférablement entre environ 5 et environ 6.

11. Une composition selon l'une des revendications précédentes, comprenant environ 5 à environ 95 % en poids, préférablement environ 50 à environ 95 % en poids d'un ou de plusieurs silanes contenant du soufre (a),
environ 5 à environ 95 % en poids, préférablement environ 5 à environ 50 % en poids d'un ou de plusieurs composés organiques (b), et
d'environ 0,01 à environ 5 % en poids, préférablement d'environ 0,01 à environ 2 % en poids, plus préférablement d'environ 0,01 à environ 1 % en poids, encore plus préférablement d'environ 0,01 à environ 0,1 % en poids, d'au moins un acide (c),
les pourcentages étant basés sur la quantité totale de la composition.

12. Un procédé de fabrication de la composition selon l'une quelconque des revendications précédentes, comprenant au moins une étape de combinaison ou de mise en contact des composants (a), (b) et/ou (c), comprenant préférablement les étapes suivantes
(i) combiner un ou plusieurs silanes contenant du soufre (a), avec au moins un acide (c) et puis avec un ou plusieurs composés organiques (b), ou
(ii) combiner un ou plusieurs composés organiques (b) avec au moins un acide (c), puis avec un ou plusieurs silanes contenant du soufre (a), ou
dans lequel au moins un acide (c) est ajouté lors de la fabrication des silanes contenant du soufre (a) ou lors de la fabrication des composés organiques (b) au moyen d'une opération unitaire comprenant le traitement des matières premières, le mélange, les étapes de réaction, les étapes de lavage, les étapes de purification, les étapes de filtration, les traitements thermiques et les traitements de post-production.

13. Une méthode pour réduire les émissions de sulfure d'hydrogène des compositions de silane contenant du soufre, comprenant l'étape d'ajout à ces compositions d'une quantité efficace d'au moins un acide choisi parmi les acides ayant un pKa, déterminé en solution aqueuse à une température de 25°C, inférieur à 3,75, et les acides de Lewis (c2).

14. Utilisation de la composition selon l'une quelconque des revendications précédentes comme additif pour les compositions de caoutchouc, comprenant une charge telle que le noir de carbone ou la silice, préférablement la silice.

15. Compositions de caoutchouc, comprenant de la silice et une ou plusieurs compositions selon l'une des revendications précédentes, et articles vulcanisés à partir de ces compositions.
